# EUROPEAN PATENT APPLICATION

(11) **EP 4 672 791 A1**
(43) Date of publication of application: **31.12.2025**
(21) Application number: 23951793.1
(22) Date of filing: 13.09.2023
(51) Int. Cl.: H04W 12/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); GAO, Ning, Dongguan, Guangdong 523860 (CN); LI, Yapu, Dongguan, Guangdong 523860 (CN)
(74) Representative: Mewburn Ellis LLP
(86) International application number: PCT/CN2023/118558
(87) International publication number: WO 2025/054852

(57) **Abstract**

Provided are a wireless communication method and a communication device. The method comprises: a first device sends a first sensing measurement signal to a second device, wherein the first sensing measurement signal is obtained on the basis of a first sensing random bitstream; the first sensing random bitstream is generated on the basis of one or more of the following first parameters: a first key, first sequence information, and an identifier of the first sensing measurement signal. In embodiments of the present application, compared with the conventional solution of generating a sensing measurement signal on the basis of a predefined sequence, the solution of generating a sensing measurement signal (referred to as "a first sensing measurement signal") on the basis of a first sensing random bitstream helps to prevent a station not joining a sensing measurement session from acquiring a sensing result on the basis of the sensing measurement signal, and then acquiring privacy of a user on the basis of the sensing result, thereby facilitating improvement of security of the privacy of the user.

## Description

### TECHNICAL FIELD

The present disclosure relates to the field of communication technology, and particularly, to a wireless communication method and a communication device.

### BACKGROUND

In some sensing measurement procedures (for example, a sensing measurement procedure specified in the IEEE 802.11 BF standard), a sensing measurement signal is generated based on a known pre-defined sequence. In this case, even a station not participating in a sensing measurement session (e.g., a malicious monitoring device) may monitor, receive and analyze the sensing measurement signal and generate channel state information (CSI) data. Accuracy of the generated CSI data is comparable to accuracy of CSI data generated by a sensing receiver participating in the sensing measurement session. As a result, the station not participating in the sensing measurement session may, according to the generated CSI data, obtain a sensing result comparable to that obtained by a sensing initiator, which may lead to user privacy leakage.

### SUMMARY

The present disclosure provides a wireless communication method and a communication device. Various aspects involved in the present disclosure will be described below.

In a first aspect, a wireless communication a method is provided and includes: transmitting, by a first device, a first sensing measurement signal to a second device, where the first sensing measurement signal is obtained based on a first sensing random bitstream, and the first sensing random bitstream is generated based on one or more of first parameters as follows: a first key; first sequence information; and an identifier of the first sensing measurement signal.

In a second aspect, a wireless communication method is provided and includes: receiving, by a second device, a first sensing measurement signal transmitted by a first device, where the first sensing measurement signal is obtained based on a first sensing random bitstream, and the first sensing random bitstream is generated based on one or more of first parameters as follows: a first key; first sequence information; and an identifier of the first sensing measurement signal.

In a third aspect, a communication device is provided. The communication device is a first device and includes: a transmitting unit, configured to transmit a first sensing measurement signal to a second device, where the first sensing measurement signal is obtained based on a first sensing random bitstream, and the first sensing random bitstream is generated based on one or more of first parameters as follows: a first key; first sequence information; and an identifier of the first sensing measurement signal.

In a fourth aspect, a communication device is provided and includes: a receiving unit, configured to receive a first sensing measurement signal transmitted by a first device, where the first sensing measurement signal is obtained based on a first sensing random bitstream, and the first sensing random bitstream is generated based on one or more of first parameters as follows: a first key; first sequence information; and an identifier of the first sensing measurement signal.

In a fifth aspect, a communication device is provided and includes a processor, a memory and a communication interface, the memory is configured to store one or more computer programs, and the processor is configured to call the computer programs in the memory, to cause the terminal device to perform part or all of the steps in the methods in various aspects mentioned above.

In a sixth aspect, embodiments of the present disclosure provide a communication system, and the system includes the first device and/or the second device mentioned above. In another possible design, the system may further include other devices that exchange with the first device or the second device in the solutions provided in the embodiments of the present disclosure.

In a seventh aspect, embodiments of the present disclosure provide a computer-readable storage medium, the computer-readable storage medium stores a computer program, and the computer program causes a communication device (e.g., the first device or the second device) to perform part or all of the steps in the methods in various aspects mentioned above.

In an eighth aspect, embodiments of the present disclosure provide a computer program product, where the computer program product includes a non-transitory computer-readable storage medium storing a computer program, and the computer program is operable to cause a communication device (e.g., the firs device or the second device) to perform part or all of the steps in the methods in various aspects mentioned above. In some implementations, the computer program product may be a software installation package.

In a ninth aspect, embodiments of the present disclosure provide a chip, the chip includes a memory and a processor, and the processor may call and run a computer program from the memory, to implement part or all of the steps described in the methods in various aspects mentioned above.

In the embodiments of the present disclosure, a sensing measurement signal (also referred to as a "first sensing measurement signal") is generated based on a first sensing random bitstream, which, compared with a solution in which the sensing measurement signal is generated based on a pre-defined sequence in conventional solutions, helps to prevent a station not participating in a sensing measurement session from obtaining a sensing result based on the sensing measurement signal and from obtaining the user's privacy based on the sensing result, thereby helping to improve security of the user's privacy.

### BRIEF DESCRIPTION OF THE DRAWINGS

FIG. 1 illustrates a wireless communication system 100 applied in the embodiments of the present disclosure.
FIG. 2 is a schematic diagram illustrating a sensing measurement process.
FIG. 3 is a schematic flowchart illustrating a trigger frame-based sensing measurement exchange applicable to the embodiments of the present disclosure.
FIG. 4 is a schematic flowchart illustrating another trigger frame-based sensing measurement exchange applicable to the embodiments of the present disclosure.
FIG. 5 is a schematic flowchart illustrating a non-trigger frame-based sensing measurement exchange applicable to the embodiments of the present disclosure.
FIG. 6 is a schematic flowchart illustrating a threshold-based reporting method applicable to the embodiments of the present disclosure.
FIG. 7 is a schematic flowchart illustrating a trigger frame-based security ranging procedure.
FIG. 8 is a schematic flowchart illustrating a non-trigger frame-based security ranging procedure.
FIG. 9 is a schematic flowchart of a wireless communication method of the embodiments of the present disclosure.
FIG. 10 is a schematic diagram illustrating a transmission process of a first parameter in an embodiment of the present disclosure.
FIG. 11 is a schematic diagram illustrating a transmission process of a first parameter in another embodiment of the present disclosure.
FIG. 12 is a schematic diagram of a communication device in the embodiments of the present disclosure.
FIG. 13 is a schematic diagram of a communication device in the embodiments of the present disclosure.
FIG. 14 is a schematic structural diagram illustrating a communication apparatus in the embodiments of the present disclosure.

### DETAILED EMBODIEMNTS

The technical solutions in the present disclosure will be described below with reference to the drawings. The technical solutions of the embodiments of the present disclosure may be applied to various communication systems, such as: wireless local area networks (WLAN), wireless fidelity (WiFi) or other communication systems.

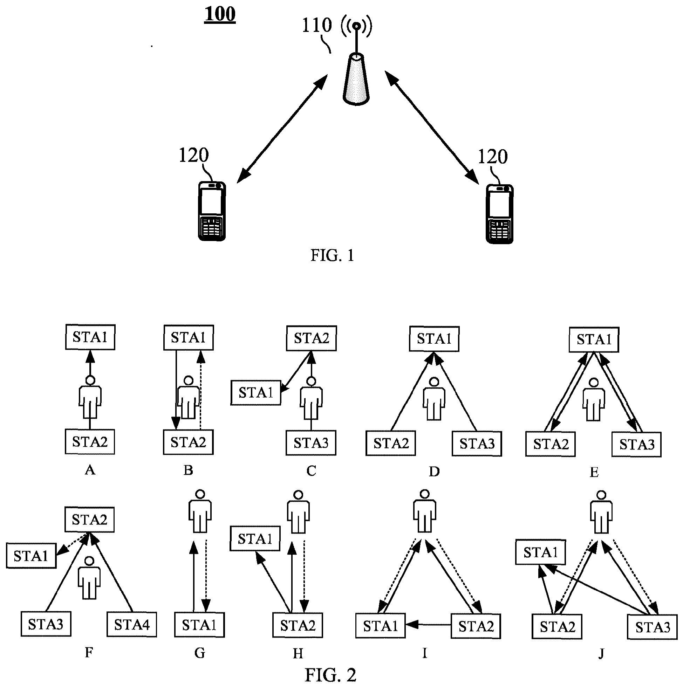

Exemplarily, a communication system 100 applied in the embodiments of the present disclosure is shown in FIG. 1. The communication system 100 may include an access point (AP) 110 and stations (STAs) 120 accessing a network through the access point 110. It shall be understood that FIG. 1 exemplarily shows one AP STA and two non-AP STAs. Optionally, the communication system 100 may include multiple AP STAs and other number of non-AP STAs, which is not limited in the embodiments of the present disclosure.

In some implementations, communication in the communication system 100 may be communication between an AP and a non-AP STA, communication between a non-AP STA and a non-AP STA, or communication between an STA and a peer STA, where the peer STA may refer to a device that communicates with the STA peer to peer. For example, the peer STA may be an AP or a non-AP STA.

The names of the AP and/or the STA are not limited in the embodiments of the present disclosure. In some scenarios, the AP may also be referred to as an AP STA. That is, in a sense, the AP is also an STA. In other scenarios, the STA may also be referred to as a non-AP STA.

In some implementations, the AP is equivalent to a bridge connecting a wired network and a wireless network, and the main function of the AP is to connect various wireless network clients together and then connect the wireless network to the Ethernet. In some scenarios, the AP device may be a terminal device (e.g., a mobile phone) or a network device (e.g., a router) that has a WiFi chip.

In some implementations, the AP and the non-AP STA may be devices applied in Internet of Vehicles; IoT nodes and sensors, etc., in the Internet of Things (IoT); smart cameras, smart remote controls, smart water and electricity meters, etc., in smart home; and sensors, etc., in smart city.

In some implementations, the AP may be a device supporting the 802.11be standard. The AP may also be a device that supports various current and future 802.11 families' WLAN standards, such as 802.11ax, 802.11ac, 802.11n, 802.11g, 802.11b and 802.11a, etc.

In some implementations, a role of the STA in the communication system is not absolute. For example, in a scenario in which a mobile phone is connected to a router, the mobile phone is a non-AP STA, and in a case where the mobile phone serves as a hotspot for other mobile phones, the mobile phone plays the role of an AP.

In the embodiments of the present disclosure, the STA may be the following that support WLAN/WiFi technology: a mobile phone, a tablet computer (Pad), a computer, a virtual reality (VR) device, an augmented reality (AR) device, a wireless device in industrial control, a set-top box, a wireless device in self-driving, a vehicle-mounted communication device, a wireless device in remote medical, a wireless device in smart grid, a wireless device in transportation safety, a wireless device in a smart city, or a wireless device in a smart home, a wireless communication chip / an application specific integrated circuit (ASIC) / a system on chip (SOC), or the like.

In some implementations, the non-AP STA may support the 802.11be standard. The non-AP STA may also support various current and future 802.11 families' wireless local area networks (WLAN) standards, such as 802.11ax, 802.11ac, 802.11n, 802.11g, 802.11b and 802.11a, etc.

Frequency bands that may be supported by the WLAN technology are not limited in the embodiments of the present disclosure. In some implementations, the frequency bands that may be supported by the WLAN technology may include but be not limited to: low frequency bands (e.g., 2.4 GHz, 5 GHz, 6 GHz) and high frequency bands (e.g., 45 GHz, 60 GHz).

In the embodiments of the present disclosure, a device having a communication function in a network/system may be referred to as a communication device. Taking the communication system 100 illustrated in FIG. 1 as an example, the communication device may include an access point 110 and stations 120 that have communication functions, and the access point 110 and the stations 120 may be the specific devices described above and will not be repeated here. The communication device may further include other devices in the communication system 100, for example, other network entities such as a network controller and a gateway, which is not limited in the embodiments of the present disclosure.

### Sensing measurement

The sensing measurement is intended to sense a person or an object in an environment by sensing a change in a sensing measurement signal (also referred to as "sensing signal") scattered and/or reflected by the person or the object. That is, the sensing measurement is to measure and sense the surrounding environment by a wireless signal, so as to complete many functions such as the detection of whether there are people intruding into the room, detection of movement and detection of fall, the posture recognition, and the establishment of a spatial three-dimensional image.

In some implementations, devices participating in the sensing measurement may include one or more of roles as follows: a sensing initiator (SI), a sensing responder (SR), a sensing transmitter, a sensing receiver, a sensing processor, and a sensing participant.

The above-mentioned sensing initiator is a device used to initiate a sensing session (sensing measurement session) and want to obtain a sensing result, or referred to as a sensing session initiator.

The above-mentioned sensing responder is another device participating in the sensing measurement session other than the sensing initiator, or referred to as a sensing session responder.

The above-mentioned sensing transmitter is a device used to initiate a sensing measurement signal, or referred to as a sensing signal transmitter.

The above-mentioned sensing receiver is a device used to receive the sensing measurement signal, or referred to as a sensing signal receiver.

The above-mentioned sensing processor is a device used to process a sensing measurement result.

The above-mentioned sensing participant may include one or more of the sensing initiator, the sensing transmitter and the sensing receiver.

It shall be noted that a device may have one or more roles in a sensing measurement. For example, a sensing initiator may be only the sensing initiator. Alternatively, the SR may become the sensing transmitter or the sensing receiver. Alternatively, the SR may be both the sensing transmitter and the sensing receiver at the same time.

For example, referring to A in FIG. 2, STA1 may be the sensing initiator, the sensing receiver, or the sensing processor; and STA2 may be the sensing transmitter.

For another example, referring to B in FIG. 2, STA1 may be the sensing initiator or the sensing transmitter; and STA2 may be the sensing receiver or the sensing processor.

For another example, referring to C in FIG. 2, STA1 may be the sensing initiator or the sensing processor; STA2 may be the sensing receiver; and STA3 may be the sensing transmitter.

For another example, referring to D in FIG. 2, STA1 may be the sensing initiator, the sensing receiver, or the sensing processor; STA2 may be a sensing transmitter; and STA3 may be the sensing transmitter.

For another example, referring to E in FIG. 2, STA1 may be the sensing initiator, the sensing transmitter, or the sensing processor; STA2 may be the sensing receiver; and STA3 may be the sensing receiver.

For another example, referring to F in FIG. 2, STA1 may be the sensing initiator; STA2 may be the sensing receiver or the sensing processor; STA3 may be the sensing transmitter; and STA4 may be the sensing transmitter.

For another example, referring to G in FIG. 2, STA1 may be the sensing initiator, the sensing transmitter, the sensing receiver, or the sensing processor.

For another example, referring to H in FIG. 2, STA1 may be the sensing initiator; STA2 may be a sensing transmitter, the sensing receiver, or the sensing processor.

For another example, referring to I in FIG. 2, STA1 may be the sensing initiator, the sensing transmitter, the sensing receiver, or the sensing processor; STA2 may be the sensing transmitter or the sensing receiver.

For another example, referring to J in FIG. 2, STA1 may be the sensing initiator or the sensing processor; STA2 may be the sensing transmitter or the sensing receiver; STA3 may be the sensing transmitter or the sensing receiver.

In some implementations, there may be multiple sensing types, For example, channel state information-based sensing (CSI-based sensing) is a sensing type in which a sensing measurement result is obtained by processing CSI of a received sensing measurement signal. For another example, a reflection signal-based sensing type (also referred to as radar-based sensing) is a sensing type in which a sensing measurement result is obtained by processing a reflection signal of the received sensing measurement signal.

In some implementations, WLAN sensing may include one or more of: a sensing measurement session; a sensing measurement exchange; and a sensing measurement session termination. In a sensing measurement session negotiation, the sensing initiator may negotiate with the sensing responder to determine the role of the sensing responder and operating parameters related to the sensing measurement. After the sensing measurement session negotiation is completed, the sensing initiator may perform multiple sensing measurement exchanges with the sensing responder. Afterwards, in a phase of the sensing measurement session termination, the sensing measurement is stopped and the sensing session is terminated.

In some implementations, the sensing measurement exchange may include: a trigger frame-based sensing measurement exchange (TB sensing measurement exchange) and a non-trigger frame-based sensing measurement exchange (Non-TB sensing measurement exchange), which are distinguished depending on a trigger mode. Generally, an AP as a sensing initiator may initiate the trigger frame-based sensing measurement exchange. A non-AP STA as a sensing initiator may initiate the non-trigger frame-based sensing measurement exchange.

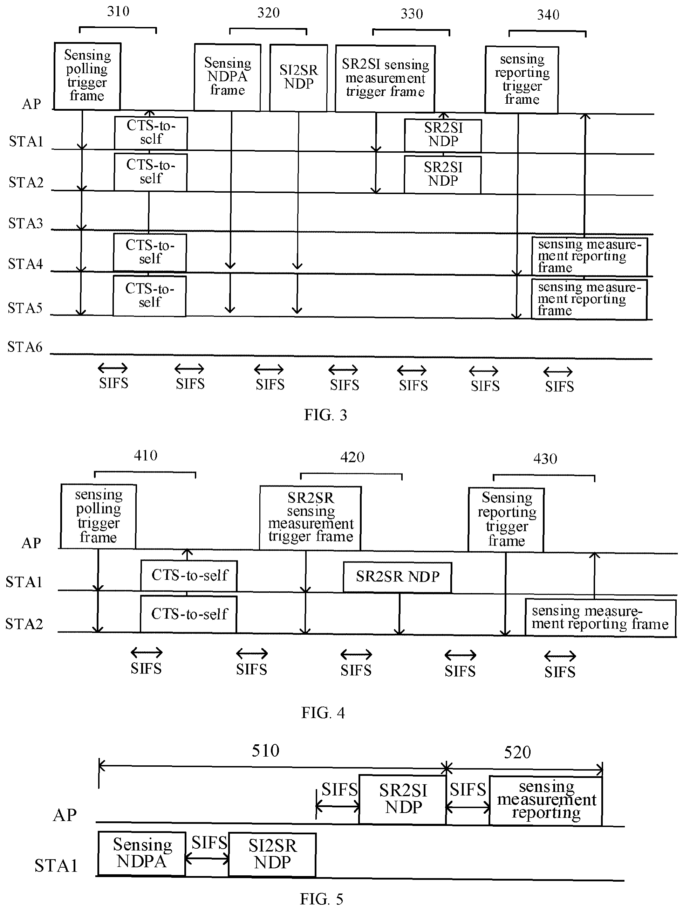

Generally, the trigger frame-based sensing measurement exchange (TB sensing measurement exchange) may include one or more of phases as follows: a polling phase, a null data physical protocol data unit announcement sounding phase (NDPA sounding phase), a sensing responder to sensing initiator (SR2SI) variant trigger sounding phase (TF sounding phase-SR2SI variant), a sensing responder to sensing responder (SR2SR) variant trigger sounding phase (TF sounding phase - SR2SR variant), and a reporting phase. The trigger frame-based sensing measurement exchange will be described below with reference to FIG. 3 and FIG. 4, respectively.

FIG. 3 is a schematic flowchart illustrating a trigger frame-based sensing measurement exchange applicable to the embodiments of the present disclosure. Assuming that AP is the sensing initiator, accordingly, STA1 to STA6 are the sensing responders. STA1 to STA3 are sensing transmitters, and STA4 to STA6 are sensing receivers.

The method shown in FIG. 3 includes a polling phase 310, an NDPA sounding phase 320, an SR2SI variation trigger sounding phase 330, and a reporting phase 340.

In the polling phase 310, the AP transmits a sensing polling trigger frame to STA1 to STA5. Accordingly, in response to receiving the sensing polling trigger frame, STA, STA2, STA4 and STA5 may transmit a CTS-to-self frame to the AP, to indicate that STA1, STA2, STA4 and STA5 may participate in the sensing measurement.

It shall be noted that STA3 does not feed back a CTS-to-self frame for some reasons, as shown in FIG.3, and then, the AP considers that STA3 cannot participate in the sensing measurement. In addition, the above-mentioned CTS-to-self frame is a frame format defined in relevant standards. In the embodiments of the present disclosure, the CTS-to-self frame is used to respond to the sensing polling trigger frame.

In the NDPA sounding phase 320, the AP transmits an NDPA frame to STA4 to STA6, to announce that the measurement is started, and transmits an SR2SI null data physical protocol data unit (NDP) at an interval. Accordingly, STA4 and STA5 as sensing signal receivers receive this NDP and generate measurement data (also referred to as "sensing measurement result").

In the SR2SI variation trigger sounding phase 330, the AP transmits a sensing SR2SI measurement trigger frame to STA1 and STA2, to request a transmission of NDP for an uplink sensing measurement. Accordingly, in response to receiving the sensing SR2SI measurement trigger frame, STA1 and STA2 transmit the NDP to the AP, so that the AP performs the uplink sensing measurement.

In the reporting phase 340, the AP transmits a sensing reporting trigger frame to STA4 and STA5, to indicate STA5 and STA6 to report the measurement data. Accordingly, in response to receiving the sensing reporting trigger frame, STA4 and STA5 transmit a sensing measurement reporting frame to the AP, and this frame carries the measurement data.

FIG. 4 is a schematic flowchart illustrating another trigger frame-based sensing measurement exchange applicable to the embodiments of the present disclosure. Assuming that AP is the sensing initiator, accordingly, STA1 and STA2 are the sensing responder and the sensing receivers respectively.

The method shown in FIG. 4 includes a polling phase 410, an SR2SR variation trigger sounding phase 420, and a reporting phase 430.

In the polling phase 410, the AP transmits a sensing polling trigger frame to STA1 and STA2. Accordingly, in response to receiving the sensing polling trigger frame, STA1 and STA2 may transmit a CTS-to-self frame to the AP, to indicate that STA1 and STA2 may participate in the sensing measurement.

In the SR2SR variation trigger sounding phase 420, the AP transmits an SR2SR sensing measurement trigger frame to STA and STA2, to trigger the sensing measurement between STA1 and STA2. Accordingly, in response to receiving the SR2SR sensing measurement trigger frame, STA1 transmits an SR2SR NDP to STA2, so that STA2 performs the sensing measurement.

In the reporting phase 430, the AP transmits a sensing reporting trigger frame to STA2, to indicate STA2 to report the measurement data. Accordingly, in response to receiving the sensing reporting trigger frame, STA2 transmits a sensing measurement reporting frame to the AP, and this frame carries the measurement data.

It shall be noted that a time interval between transmissions of the information is not limited in procedures of methods described above with reference to FIG. 3 and FIG. 4. In some implementations, a time interval between transmissions of different information in a same phase may be a short interframe space (SIFS). In some other implementations, a time interval between different phases mentioned above may be an SIFS. Specific examples may refer to FIG. 3 and FIG. 4.

The trigger frame-based sensing measurement exchange applicable to the embodiments of the present disclosure is described above, and the non-trigger frame-based sensing measurement exchange in the embodiments of the present disclosure will be described below with reference to FIG. 5. Generally, the non-trigger frame-based sensing measurement exchange may include a sounding phase and a reporting phase.

FIG. 5 is a schematic flowchart illustrating a non-trigger frame-based sensing measurement exchange applicable to the embodiments of the present disclosure. Assuming that the AP is the sensing responder, accordingly, STA1 is the sensing initiator. As shown in FIG. 5, the method includes a sounding phase 510 and a reporting phase 520.

In the sounding phase 510, the AP may transmit an NDPA frame to STA1, to announce that the measurement is started. After a period of time, the AP continues to transmit an SI2SR NDP frame to STA1, so that STA1 may perform the sensing measurement. Accordingly, in response to receiving the SI2SR NDP frame, the AP transmits an SI2SR NDP to STA1, so that the AP may perform the sensing measurement.

In the reporting phase 520, the AP transmits a sensing measurement reporting frame to STA1, and this frame carries measurement data obtained by the AP through performing the sensing measurement.

It shall be noted that the time interval between transmissions of the information is not limited in the procedure of the method described above with reference to FIG. 5. In some implementations, the time interval between transmissions of different information in the same phase may be an SIFS. In some other implementations, the time interval between the different phases mentioned above may be an SIFS. Specific examples may refer to FIG. 5.

In some implementations, the reporting phase mentioned above may be divided into a threshold-based reporting phase and a basic reporting phase. The threshold-based reporting phase helps to reduce the transmission overhead required for reporting the sensing measurement result. This is due to the fact that a data volume of the sensing measurement result is usually relatively large (for example, the CSI data measured in one measurement may reach 4K to 40K bits), and in this case, if the measurement data is reported after each measurement, it may result in a too large transmission overhead required for reporting the sensing measurement result. Therefore, a measurement-based and threshold-based reporting phase is introduced. That is, in a case where a variation between a current measurement result and a previous measurement result is greater than a threshold, the sensing receiver reports the measurement data, and otherwise, in a case where the variation between the current measurement result and the previous measurement result is less than or equal to the threshold, the sensing receiver does not report the measurement data.

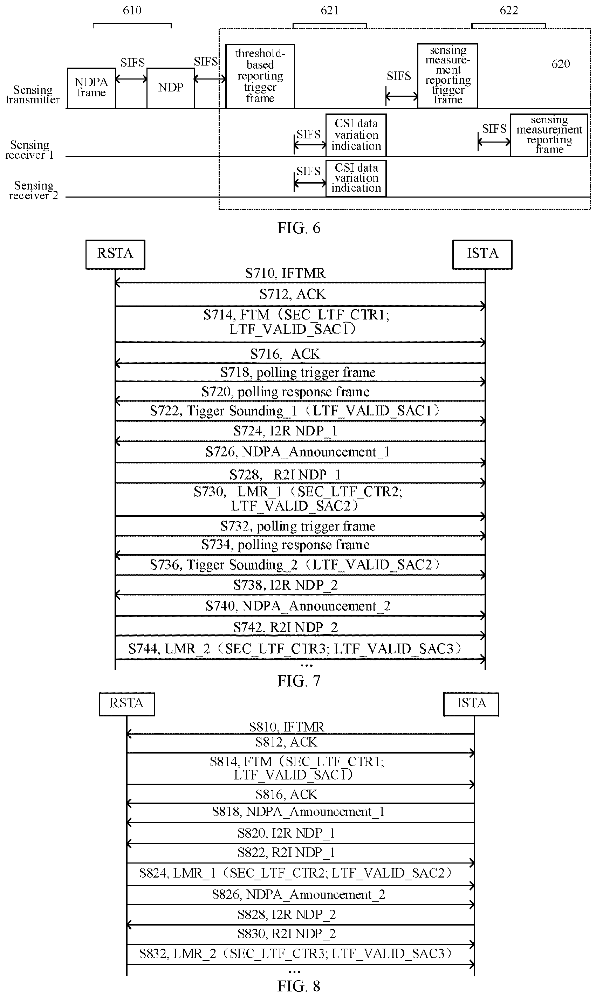

The threshold-based reporting phase applicable to the embodiments of the present disclosure will be described below with reference to FIG. 6. Assuming that the sensing transmitter is the sensing initiator, the sensing receivers 1 and 2 may be sensing responders.

Referring to FIG. 6, in the NDPA sounding phase 610, the sensing transmitter transmits an NDPA frame to the sensing receivers 1 and 2 to announce that the measurement is started, and transmits an NDP after a period of time (e.g., SIFS). Accordingly, the sensing receivers 1 and 2 receive the NDP and generate measurement data.

Continuing to refer to FIG. 6, the threshold-based reporting phase 620 may be divided into a CSI variation reporting subphase 621 and a measurement reporting subphase 622.

In the CSI variation reporting subphase 621, the sensing transmitter transmits a threshold-based sensing reporting trigger frame to the sensing receivers 1 and 2, to trigger the sensing receivers 1 and 2 to report a CSI data variation indication. Accordingly, in a case where the threshold-based reporting condition is met, and in response to receiving the threshold-based sensing reporting trigger frame, the sensing receiver 1 and the sensing receiver 2 may feedback a sensing measurement reporting frame to the sensing transmitter, and this frame carries the CSI data variant indication.

In the measurement reporting subphase 622, in a case where the threshold-based reporting condition is met, the sensing transmitter transmits a sensing reporting trigger frame to the sensing receiver 1; and in a case where the threshold-based reporting condition is not met, the sensing transmitter does not transmit the sensing reporting trigger frame to the sensing receiver 1. In response to receiving the sensing reporting trigger frame, the sensing receiver 1 may feed back the sensing measurement reporting frame to the sensing transmitter, and this frame carries the measurement data.

It shall be noted that a time interval between transmissions of the information is not limited in the procedure of the method described above with reference to FIG. 6. In some implementations, the time interval between transmissions of different information in the same phase may be an SIFS. In some other implementations, the time interval between different phases mentioned above may be an SIFS. Specific examples may refer to FIG. 6.

### Security Ranging

In some scenarios, the measurement signal may be used for security ranging. For example, the IEEE 802.11az standard specifies how to implement WLAN security ranging by using a WLAN signal compliant with the IEEE 802.11 protocol. Generally, in a scenario of security ranging, a ranging initiator may be a station (generally, a non-AP STA), and a ranging responder may be an AP.

It is specified in some protocols (e.g., IEEE 802.11az) that there are multiple establishment modes of security ranging. For example, the security ranging may be established through a successful 4-way handshake based on a security association context of a pairwise transient key (pairwise transient key security association, PTKSA). For another example, the security ranging may be established through fast initial link setup (FILS). For another example, the security ranging may be established through pre-association security negotiation (PASN). PTKSA mainly includes a pairwise transient key (PTK) derived from a pairwise master key (PMK) and multiple subkeys generated by the PMK (for example, including a transient key (TK), a key derivation key (KDK), etc.). The TK may be used to encrypt an unicast data frame and an association frame that are under protection, and the KDK may be used to generate a secure long training field (secure LTF).

It is specified in some protocols (e.g., IEEE 802.11az) that a ranging initiator (initiating STA, ISTA) in a security ranging procedure may use ista-ltf-key to generate a pseudo-random stream for protecting the long training field (LTF, also referred to as high-efficiency-LTF, HE-LTF) in a physical protocol unit (PPDU) (generally, carried in an NDP frame) transmitted by the ISTA. Accordingly, a ranging responder (responding STA, RSTA) uses rsta-ltf-key to generate a pseudo-random stream for protecting an HE-LTF in a PPDU (generally, carried in the NDP frame) transmitted by the RSTA. The ista-ltf-key and the rsta-ltf-key are derived based on the KDK and a secure long training field counter (Secure-LTF-Counter). The derivation process of the ista-ltf-key and the rsta-ltf-key will be described below with formulas.

In step 1, a key seed "Secure-LTF-Key-Seed" is generated. That is, Secure-LTF-Key-Seed = HMAC-Hash (KDK, "Secure LTF key seed"), where HMAC denotes a key-based hash method for message authentication (referring to the specification of the IETF RFC 2104 standard), Hash indicates a specific hash function. Accordingly, HMAC-Hash (key, massage) denotes a hash function in a form of HMAC, key denotes a first key, and information "massage" denotes a message content to be authenticated, i.e., the sensing LTF key seed "Sensing LTF key seed" in the formula.

In step 2, a sequence authentication code (SAC) and an LTF key "SAC-and-LTF-Keys" are generated based on the key seed "Sensing-LTF-Key-Seed". That is, SAC-and-LTF-Keys = KDF-Hash-Length (Secure-LTF-Key-Seed, "Secure LTF Expansion", Secure-LTF-Counter), where KDF-Hash-Length (K, Label, Context) denotes a pseudo-random method used to derive the key, Hash denotes a specific hash function, Length denotes a length of a derived key, and K denotes the key, i.e., "Secure-LTF-Key-Seed"; Label denotes a usage of the derived key, i.e., secure LTF description; Context is used to indicate a context used for the derivation, i.e., a sensing LTF counter (Sensing-LTF-Counter). Typically, the length of the key may be 272 bits.

In step 3, an SAC is generated based on the SAC and the LTF key "SAC-and-LTF-Keys". That is, SAC = L(SAC-and-LTF-Keys, 0, 16), which denotes that data with the length of 16 bits obtained by being truncated starting from the 0th bit of SAC-and-LTF-Keys, is used as the SAC.

In step 4, ista-ltf-key is generated based on the SAC and the LTF key "SAC-and-LTF-Keys". That is, ista-ltf-key = L(SAC-and-LTF-Keys, 16, 128), which denotes that data with the length of 128 bits obtained by being truncated starting from the 16th bit of SAC-and-LTF-Keys, is used as the ista-ltf-key.

In step 5, rsta-ltf-key is generated based on the SAC and the LTF key "SAC-and-LTF-Keys". That is, rsta-ltf-key = L(SAC-and-LTF-Keys, 144, 128), which denotes that data with the length of 128 bits obtained by being truncated starting from the 144th bit of SAC-and-LTF-Keys, is used as the rsta-ltf-key.

In step 6, an input value "Input-Value (IV)" is generated. That is, IV (16 octets) = A2 (6 octets) ∥ Secure-LTF-Counter (6 octets) ∥ block counter (4 octets). The character '∥' denotes a connection operation on two byte streams, A2 denotes an MAC address (usually 6 bytes) of the ranging signal transmitter; the character string of the sensing LTF counter "Sensing-LTF-Counter" denotes a character string form of an integer sensing LTF counter (usually 6 bytes); and block counter denotes a block counter for recording a block number during encryption (usually 4 bytes). For example, the block counter is used to record a block number in AES encryption, and an initial value of the block counter is 0 during the encryption for the first time, and then, the value of the block counter is increased by 1 after every 128 bits are generated.

The derivation process of the ista-ltf-key and the rsta-ltf-key is described above. The procedure of the method of the security ranging specified in some protocols (e.g., IEEE 802.11az) will be described below.

In the trigger frame-based security ranging (TB ranging) procedure, the ISTA may transmit an initial fine time measurement request frame (initial fine time measurement request, also referred to as an initial FTM request (IFTMR)), to request to establish a secure ranging session and negotiate a measurement parameter. Accordingly, the RSTA responds with an initial fine time measurement frame (fine time measurement, FTM) and carries the measurement parameter in the FTM. The measurement parameter includes: a security ranging parameter (SEC_LTF_CTR1), which indicates a secure long training field counter value to be used for a first measurement; and LTF_VALID_SAC1, which indicates an SAC value corresponding to the secure long training field counter value to be used for the first measurement.

In the first measurement, the measurement signal is generated and transmitted using the ista-ltf-key and the rsta-ltf-key generated by the SEC _LTF _CTR1. For the case of carrying the SAC in the secure ranging (secure sounding ranging) trigger frame transmitted by RSTA, the SAC indicates verification information of the secure long training field to be used in this measurement. Accordingly, after receiving the SAC carried in the security ranging trigger frame, the ISTA may verify whether a value of the SAC is consistent with a value of an SAC generated by the ISTA itself in this measurement, and if they are inconsistent, it means that an error occurs.

If the value of the SAC in the security ranging trigger frame is consistent with the value of the SAC generated by the ISTA itself in this measurement, the RSTA may transmit a location measurement report frame (location measurement report, LMR) to the ISTA after the measurement is completed, and this frame carries the value of the SAC (measurement SAC) used in this measurement and security ranging parameters (SEC_LTF_CTR2 and LTF_VALID_SAC2) to be used in a next measurement.

If the value of the SAC in the security ranging trigger frame is inconsistent with the value of the SAC generated by the ISTA itself in this measurement, the RSTA may, when the error occurs, transmit the LMR to the ISTA, and indicate, in this frame, that data in the measurement report is invalid. Furthermore, the value of the SAC used in this measurement that is carried in the LMR is set as an invalid value 0.

Accordingly, after obtaining the measurement SAC from the LMR, the ISTA may verify whether the value of the SAC is consistent with the value of the SAC generated by the ISTA itself in this measurement, and if inconsistency, it also indicates that an error occurs.

In some implementations, CTR mentioned above is a value of Secure-LTF-Counter, which increases by 1 by default in each measurement exchange. If the generated value of the SAC is 0, the CTR continues to be increased until the generated value of the SAC is non-zero.

For the non-trigger frame-based security ranging procedure, the ISTA transmits a ranging NDP announcement frame to the RSTA, and this frame carries an SAC field, which indicates sequence verification information of the secure long training field to be used in this measurement. After receiving the frame, the RSTA may verify whether the value of the SAC is consistent with the value of the SAC generated by itself in this measurement, and if inconsistent, it indicates that an error occurs. The subsequent ranging process may be similar to the trigger frame-based security ranging procedure above, and may refer to the trigger frame-based security ranging procedure above, which will not be repeated for brevity.

The method procedure of the security ranging will be described below with reference to FIG. 7 and FIG. 8. FIG. 7 shows the trigger frame-based security ranging procedure. FIG. 8 shows the non-trigger frame-based security ranging procedure.

Referring to FIG. 7, steps S710 to S728 are procedure steps in a first security ranging, and steps S730 to S744 are procedure steps in a second security ranging.

In step S710, an ISTA transmits an IFTMR to an RSTA, to request the establishment of a secure ranging session and the negotiation of measurement parameters.

In step S712, the RSTA transmits an ACK to the ISTA, to indicate a successful reception of the IFTMR.

In step S714, the RSTA transmits an initial FTM to the ISTA and carries measurement parameters in the FTM, where the measurement parameters include: a security ranging parameter (SEC_LTF_CTR1), which indicates a secure long training field counter value to be used for the first measurement; and LTF_VALID_SAC1, which indicates a value of an SAC corresponding to the secure long training field counter value to be used for the first measurement.

In step S716, the ISTA transmits an ACK to the RSTA to indicate a successful reception of the FTM.

In step S718, the RSTA transmits a polling trigger frame to the ISTA, to determine an RSTA capable of participating in the security ranging.

In step S720, in response to receiving the polling trigger frame, the ISTA transmits a polling response frame to the RSTA, to indicate that the RSTA is capable of participating in the security ranging.

In step S722, the RSTA transmits a measurement trigger frame 1 (Tigger Sounding_1) to the ISTA, and the measurement trigger frame 1 carries LTF_VALID _SAC1.

In step S724, the ISTA transmits I2R NDP_1 to the RSTA, where an LTF sequence carried in the I2R NDP_1 is generated based on SEC_LTF_CTR1 and ista-ltf-key1.

In step S726, the RSTA transmits an NDPA frame (NDPA_Announcement_1) to the ISTA, to announce that the secure positioning measurement is started.

In step S728, the RSTA transmits R2I NDP_1 to the ISTA, where an LTF sequence carried in the R2I NDP_1 is generated based on SEC_LTF_CTR1 and rsta-ltf-key1.

In step S730, the RSTA transmits LMR_1 to the ISTA, and carries measurement parameters in the LMR_1, where the measurement parameters include: a security ranging parameter (SEC_LTF_CTR2), which indicates a secure long training field counter value to be used in a next measurement; and LTF _VALID_SAC2, which indicates a value of SAC corresponding to the secure long training field counter value to be used in the next measurement.

In step S732, the RSTA transmits a polling trigger frame to the ISTA, to determine an RSTA capable of participating in the security ranging.

In step S734, in response to receiving the polling trigger frame, the ISTA transmits a polling response frame to the RSTA, to indicate that the RSTA is capable of participating in the security ranging.

In step S736, the RSTA transmits the measurement trigger frame 2 (Tigger Sounding_2) to the ISTA, and the measurement trigger frame 2 carries LTF_VALID_SAC2.

In step S738, the ISTA transmits I2R NDP_2 to the RSTA, where an LTF sequence carried in the I2R NDP_2 is generated based on SEC_LTF_CTR2 and ista-ltf-key2.

In step S740, the RSTA transmits an NDPA frame (NDPA_Announcement_2) to the ISTA, to announce that the secure positioning measurement is started.

In step S742, the RSTA transmits an R2I NDP_2 to the ISTA, where an LTF sequence carried in the R2I NDP_2 is generated based on SEC_LTF_CTR2 and rsta-ltf-key2.

In step S744, the RSTA transmits an LMR_2 to the ISTA, and the LMR_2 carries measurement parameters. The measurement parameters include: a security ranging parameter (SEC_LTF_CTR3), which indicates a secure long training field counter value to be used in a next measurement; and LTF_VALID_SAC3, which indicates a value of an SAC corresponding to the secure long training field counter value to be used in the next measurement.

It shall be noted that if LMR_2 is of a delayed feedback type, the measurement SAC carried in LMR_2 may be set as LTF_VALID_SAC1. If LMR_2 is of an immediate feedback type, the measurement SAC carried in LMR_2 may be set as LTF_VALID_SAC2.

Referring to FIG. 8, step S810 to step S824 are procedure steps in a first security ranging, and step S826 to step S832 are procedure steps in a second security ranging.

In step S810, the ISTA transmits an IFTMR to the RSTA, to request the establishment of a secure ranging session and the negotiation of measurement parameters.

In step S812, the RSTA transmits an ACK to the ISTA, to indicate a successful reception of the IFTMR.

In step S814, the RSTA transmits an initial FTM to the ISTA and carries measurement parameters in the FTM, where the measurement parameters include: a security ranging parameter (SEC_LTF_CTR1), which indicates a secure long training field counter value to be used for the first measurement; and LTF_VALID_SAC1, which indicates a value of an SAC corresponding to the secure long training field counter value to be used in the first measurement.

In step S816, the ISTA transmits an ACK to the RSTA, to indicate a successful reception of the FTM.

In step S818, the ISTA transmits an NDPA frame (NDPA_Announcement_1) to the RSTA, to announce that the secure positioning measurement is started.

In step S820, the ISTA transmits I2R NDP_1 to the RSTA, where an LTF sequence carried in the I2R NDP_1 is generated based on SEC_LTF_CTR1 and rsta-ltf-key1.

In step S822, the RSTA transmits R2I NDP_1 to the ISTA, where an LTF sequence carried in the R2I NDP_1 is generated based on SEC_LTF_CTR1 and ista-ltf-key1.

In step S824, the RSTA transmits LMR_1 to the ISTA, and the LMR_1 carries measurement parameters, where the measurement parameters include: a security ranging parameter (SEC _LTF_CTR2), which indicates a secure long training field counter value to be used in a next measurement; and LTF _VALID_SAC2, which indicates a value of an SAC corresponding to the secure long training field counter value to be used in the next measurement.

In step S826, the RSTA transmits an NDPA frame (NDPA_Announcement_2) to the ISTA, to announce that the secure positioning measurement is started.

In step S828, the ISTA transmits I2R NDP_2 to the RSTA, where an LTF sequence carried in the I2R NDP_2 is generated based on SEC _LTF_CTR2 and ista-ltf-key2.

In step S830, the RSTA transmits R2I NDP_2 to the ISTA, where an LTF sequence carried in R2I NDP_2 is generated based on SEC_LTF_CTR2 and rsta-ltf-key2.

In step S832, the RSTA transmits LMR_2 to the ISTA, and the LMR_2 carries measurement parameters, where the measurement parameters include: a security ranging parameter (SEC _LTF_CTR3), which indicates a secure long training field counter value to be used in a next measurement; and LTF _VALID_SAC3, which indicates a value of an SAC corresponding to the secure long training field counter value to be used in the next measurement.

It shall be noted that if LMR_2 is of a delayed feedback type, the measurement SAC carried in the LMR_2 may be set as LTF_VALID_SAC1. If LMR_2 is of an immediate feedback type, the measurement SAC carried in the LMR_2 may be set as LTF_VALID_SAC2.

In some sensing measurement procedures (e.g., a sensing measurement procedure specified in the IEEE 802.11 BF standard), the sensing measurement signal (e.g., the LTF in the NDP) is generated based on a known pre-defined sequence. In this case, even a station not participating in a sensing measurement session (e.g., a malicious monitoring device) may monitor, receive and analyze the sensing measurement signal and generate channel state information (CSI) data, and accuracy of the generated CSI data is comparable to accuracy of CSI data generated by a sensing receiver participating in the sensing measurement session. As a result, the station not participating in the sensing measurement session may, according to the generated CSI data, obtain a sensing result comparable to that obtained by a sensing initiator, which may lead to user privacy leakage. For example, the malicious monitoring device may obtain information such as the user's gestures, postures, activity trajectories, sleep curves, and vital signs (e.g., breathing/heartbeat) based on the generated CSI data.

Therefore, for the above problems, the embodiments of the present disclosure provide a wireless communication method. In the method, the sensing measurement signal (also referred to as a "first sensing measurement signal") is generated based on a first sensing random bitstream, which, compared with a solution in which the sensing measurement signal is generated based on a pre-defined sequence in conventional solutions, helps to prevent a station not participating in a sensing measurement session from obtaining a sensing result based on the sensing measurement signal and from obtaining the user's privacy based on the sensing result, thereby helping to improve security of the user's privacy.

For example, assuming that the sensing measurement signal transmitted by the sensing transmitter is X, tactual CSI is represented as H and the sensing measurement signal received by the sensing receiver is Y, then, a relationship between the three items may be expressed by a formula H=Y/X. In this case, a legal sensing receiver may calculate H by the above-mentioned formula since it may obtain an accurate X and Y. For a conventional mode of generating the sensing measurement signal, the sensing measurement signal is generated based on the pre-defined sequence, as a result, the malicious sensing receiver may also obtain the accurate X, that is, the malicious sensing receiver may calculate H based on X and Y by the above-mentioned formula, to obtain the user privacy.

However, with the mode of generating the first sensing measurement signal provided in the embodiments of the present disclosure, the sensing measurement signal X is generated based on the first random bitstream, and in this case, since the legal sensing receiver may obtain the first random bitstream, it may still obtain the accurate X and Y, and may calculate H by the above-mentioned formula. However, since the malicious monitoring device cannot obtain the first random bitstream, and then cannot obtain the accurate X, even if the malicious monitoring device may obtain Y, this device cannot obtain the accurate H, thereby avoiding the leakage of the user's privacy.

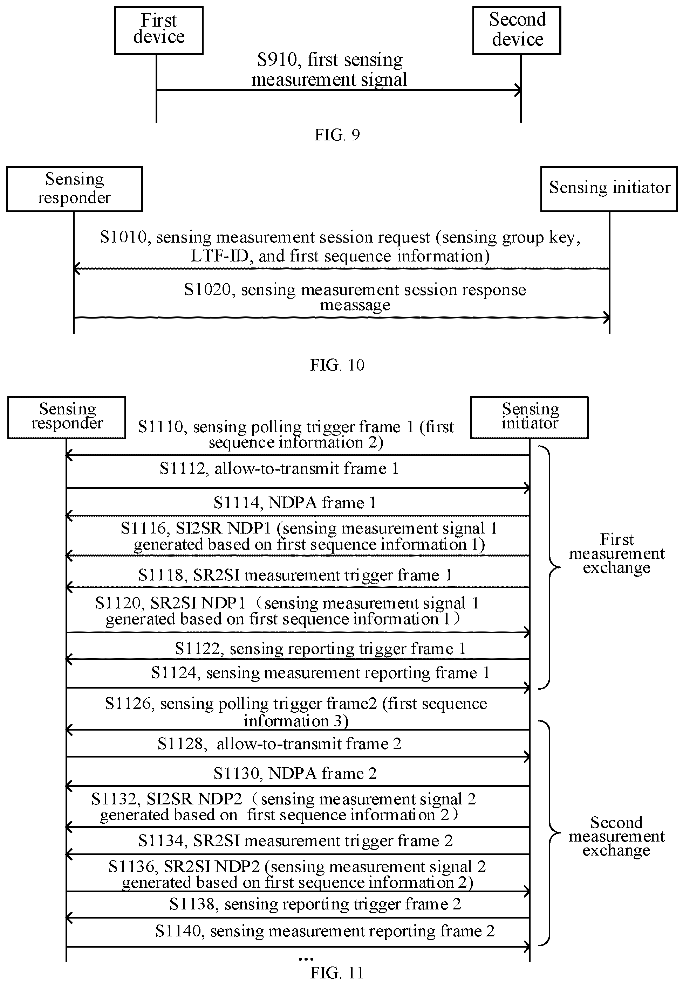

A schematic flowchart illustrating a wireless communication method in the embodiments of the present disclosure will be described below with reference to FIG. 9. The method shown in FIG. 9 includes step S910. In step S910, a first device transmits a first sensing measurement signal to a second device.

Roles of the first device and/or the second device in a sensing measurement are not limited in the embodiments of the present disclosure. For example, the first device may be a sensing initiator, and accordingly, the second device may be a sensing responder. For another example, the second device may be a sensing initiator, and accordingly, the first device may be a sensing responder. For another example, the first device may be a sensing transmitter, and accordingly, the second device may be a sensing receiver.

Furthermore, device types of the first device and/or the second device are not limited in the embodiments of the present disclosure. For example, the first device may be an AP, and the second device may be an STA. For another example, the second device may be an AP, and the first device may be an STA. For another example, both the first device and the second device may be STAs.

In some implementations, the first sensing measurement signal is obtained based on a first sensing random bitstream (Sensing-Random-Bits). The name of the term "first sensing random bitstream" is not limited in the embodiments of the present disclosure. For example, the first random bitstream may be replaced with one or more sensing random bits. For another example, the first random bitstream may be replaced with a first sensing random sequence.

In some implementations, the first sensing measurement signal may be an LTF or an HE-LTF in an NDP. Certainly, in the embodiments of the present disclosure, the first sensing measurement signal may also be other fields or signals newly introduced in future communication systems.

The method of generating the first sensing measurement signal is not limited in the embodiments of the present disclosure. In some implementations, the first sensing measurement signal may be perturbed by using the first sensing random bitstream. For example, the first sensing random bitstream may be used to randomize phases of subcarriers of different streams, and the first sensing random bitstream may be used to randomize a 64-quadrature amplitude modulation (64-QAM) value of each subcarrier of each LTF symbol on each stream.

The solution of generating the first sensing measurement signal in the embodiments of the present disclosure is described above. A mode of generating the first sensing random bitstream in the embodiments of the present disclosure will be described below. It shall be noted that the mode of generating the first random bitstream is not limited in the embodiments of the present disclosure. For example, the first random bitstream may be composed of one or more random numbers. For another example, the first random bitstream may be generated based on a random sequence. Certainly, the first random bitstream may also be generated based on a first parameter.

In some implementations, the first sensing random bitstream is generated based on one or more of first parameters as follows: a first key; first sequence information; an identifier of the first sensing measurement signal.

If the first parameter includes the identifier of the first sensing measurement signal, in some scenarios, the first sensing measurement signal may be an LTF. Accordingly, the identifier of the first sensing measurement signal may be referred to as an LTF identifier, i.e., LTF-ID. Generally, the identifier of the first sensing measurement signal may be 6 bytes (octets). Certainly, in the embodiments of the present disclosure, the identifier of the first sensing measurement signal may also be other octets, for example, 7 bytes, 8 bytes, etc.

In some implementations, the identifier is determined based on one or more of: a medium access control (MAC) address of the first device; an identifier of a basic service set (BSS) to which the first device belongs; a sensing measurement session identifier corresponding to the first sensing measurement signal; a sensing measurement exchange identifier corresponding to the first sensing measurement signal; and a first random sequence.

In some implementations, the MAC address of the first device may also be referred to as an MAC address of the sensing measurement signal transmitter.

In the embodiments of the present disclosure, the identifier of the first sensing measurement signal being determined based on the MAC address of the first device mentioned above, may include that the identifier of the first sensing measurement signal is the MAC address of the first device, or that the identifier of the first sensing measurement signal is obtained from processing the MAC address of the first device, which is not limited in the embodiments of the present disclosure.

For example, in a case where a size of the identifier of the first sensing measurement signal is L bytes (where a value of L is a positive integer, for example, L=6) and a size of the MAC address of the first device is L bytes, the MAC address may be directly used as the identifier of the first sensing measurement signal. For another example, in a case where the size of the MAC address of the first device is less than L bytes, the MAC address of the first device may be processed, so that a processed MAC address of the first device with a size of L bytes is used as the identifier of the first sensing measurement signal. For example, the above-mentioned processing may include padding a header of the MAC address of the first device with an escape character '\0'. For another example, in a case where the size of the MAC address of the first device is greater than L bytes, the MAC address of the first device may be processed, so that the processed MAC address of the first device with the size of L bytes is used as the identifier of the first sensing measurement signal. For example, the above-mentioned processing may include truncating the MAC address of the first device.

In some implementations, the identifier of the BSS (BSSID) to which the first device belongs is generally an MAC address of an AP corresponding to the BSS.

In the embodiments of the present disclosure, the identifier of the first sensing measurement signal being determined based on the BSSID, may include that the identifier of the first sensing measurement signal is the BSSID, or that the identifier of the first sensing measurement signal is obtained from processing the BSSID, which is not limited in the embodiments of the present disclosure.

For example, in a case where the size of the identifier of the first sensing measurement signal is L bytes and a size of the BSSID is L bytes, the BSSID may be directly used as the identifier of the first sensing measurement signal. For another example, in a case where the size of the BSSID is less than L bytes, the BSSID may be processed, so that a processed BSSID with a size of L bytes is used as the identifier of the first sensing measurement signal. For example, the above-mentioned processing may include padding the BSSID with the escape character '\0'. For another example, in a case where the size of the BSSID is greater than L bytes, the BSSID may be processed, so that the processed BSSID with a size of L bytes is used as the identifier of the first sensing measurement signal. For example, the above-mentioned processing may include truncating the BSSID.

In some implementations, the identifier of the first sensing measurement signal may be determined based on the sensing measurement session identifier, where the sensing measurement session identifier is used to identify a sensing measurement session.

In the embodiments of the present disclosure, the identifier of the first sensing measurement signal being determined based on the sensing measurement session identifier, may include that the identifier of the first sensing measurement signal is the sensing measurement session identifier, or that the identifier of the first sensing measurement signal is obtained from processing the sensing measurement session identifier, which is not limited in the embodiments of the present disclosure.

For example, in a case where the size of the identifier of the first sensing measurement signal is L bytes and a size of the sensing measurement session identifier is L bytes, the sensing measurement session identifier may be directly used as the identifier of the first sensing measurement signal. For another example, in a case where the size of the sensing measurement session identifier is less than L bytes, the sensing measurement session identifier may be processed, so that a processed sensing measurement session identifier with a size of L bytes is used as the identifier of the first sensing measurement signal. For example, the above-mentioned processing may include padding the sensing measurement session identifier with the escape character '\0'. For another example, in a case where the size of the sensing measurement session identifier is greater than L bytes, the sensing measurement session identifier may be processed, so that the processed sensing measurement session identifier with a size of L bytes is used as the identifier of the first sensing measurement signal. For example, the above-mentioned processing may include truncating the sensing measurement session identifier.

In some implementations, the identifier of the first sensing measurement signal may be determined based on the sensing measurement exchange identifier, and the sensing measurement exchange identifier is used to identify the sensing measurement exchange.

In the embodiments of the present disclosure, the identifier of the first sensing measurement signal being determined based on the sensing measurement exchange identifier may include that the identifier of the first sensing measurement signal is the sensing measurement exchange identifier, or that the identifier of the first sensing measurement signal is obtained after processing the sensing measurement exchange identifier, which is not limited in the embodiments of the present disclosure.

For example, in a case where the size of the identifier of the first sensing measurement signal is L bytes and a size of the sensing measurement exchange identifier is L bytes, the sensing measurement exchange identifier may be directly used as the identifier of the first sensing measurement signal. For another example, in a case where the size of the sensing measurement exchange identifier is less than L bytes, the sensing measurement exchange identifier may be processed, so that a processed sensing measurement exchange identifier with a size of L bytes serves as the identifier of the first sensing measurement signal. For example, the processing may include padding the sensing measurement exchange identifier with the escape character '\0'. For another example, in a case where the size of the sensing measurement exchange identifier is greater than L bytes, the sensing measurement exchange identifier may be processed, so that the processed sensing measurement exchange identifier with the size of L bytes serves as the identifier of the first sensing measurement signal. For example, the processing may include truncating the sensing measurement exchange identifier.

In some implementations, the identifier of the first sensing measurement signal mentioned above may be determined based on the first random sequence, where the first random sequence is a random sequence obtained by a station from an access point during a sensing session negotiation. For example, in the sensing measurement session negotiation, the access point distributes a random sequence to one or more stations, and the random sequence is common to the multiple stations, and in this case, the first sensing measurement signal may be generated based on the random sequence.

In the embodiments of the present disclosure, the identifier of the first sensing measurement signal being determined based on the first random sequence, may include that the identifier of the first sensing measurement signal is the first random sequence, or that the identifier of the first sensing measurement signal is obtained from processing the first random sequence, which is not limited in the embodiments of the present disclosure.

For example, in a case where the size of the identifier of the first sensing measurement signal is L bytes and a size of the first random sequence is L bytes, the first random sequence may be directly used as the identifier of the first sensing measurement signal. For another example, in a case where the size of the first random sequence is less than L bytes, the first random sequence may be processed, so that a processed first random sequence with a size of L bytes is used as the identifier of the first sensing measurement signal. For example, the above-mentioned processing may include padding the first random sequence with the escape character '\0'. For another example, in a case where the size of the first random sequence is greater than L bytes, the first random sequence may be processed, so that the processed first random sequence with a size of L bytes is used as the identifier of the first sensing measurement signal. For example, the above-mentioned processing may include truncating the first random sequence.

If the first parameter includes the first key, in some implementations, the first key may be a key common to devices participating in the sensing measurement, where the devices participating in the sensing measurement may include, for example, the first device and the second device. In some implementations, the first device and the second device may belong to a sensing measurement group.

In some implementations, the first key is determined based on one or more of: a group key; a sensing group key; a pairwise key; a peer-to-peer pairwise key.

In some implementations, the above-mentioned group key may be a key for the BSS, that is, the group key may be a key common to devices (including the access point and/or station) in the BSS. For example, the group key may be a group transient key (GTK).

It shall be noted that the above-mentioned group key may be a group key used in the sensing measurement, and certainly, in the embodiments of the present disclosure, the above-mentioned group key may also be a group key applied in other scenarios.

In the embodiments of the present disclosure, the first key being determined based on the group key, may include that the first key is the group key, or that the first key is a key obtained from processing the group key. For example, the first key may be a key derived from the group key.

In the embodiments of the present disclosure, since the group key is a common key obtained by the first device and the second device before the sensing measurement, the first sensing random bitstream is generated based on the group key, which helps the second device to quickly obtain the first sensing random bitstream and parse the first sensing measurement signal based on the first sensing random bitstream.

For example, if the first sensing random bitstream is generated based on the group key, the access point, in the trigger frame-based sensing measurement, can quickly and simply parse the sensing signal transmitted by the station in the trigger frame-based sounding phase of SR2SI variant (TF sounding phase - SR2SI variant) and/or the trigger frame-based sounding phase of SR2SR variant (TF sounding phase - SR2SR variant).

For another example, if the first sensing random bitstream is generated based on the group key, multiple stations, in the trigger frame-based sensing measurement, can parse the sensing signal transmitted by the access point, in the NDPA frame-based sounding phase (NDPA sounding phase).

For another example, if the first sensing random bitstream is generated based on the group key, multiple stations and/or the access point, in the trigger frame-based sensing measurement, can also quickly and simply parse and identify the sensing signal transmitted by a station for transmitting the sensing signal, in the trigger frame-based sounding phase of SR2SR variant (TF sounding phase - SR2SR variant).

For another example, if the first sensing random bitstream is generated based on the group key, the access point and a single station, in the non-trigger frame-based sensing measurement, can also quickly and simply parse the sensing signal transmitted by a peer.

In some implementations, the above-mentioned sensing group key may be a key for the sensing measurement session, or the above-mentioned sensing group key may be a key for the sensing measurement exchange.

Taking an example in which the sensing group key is the key for the sensing measurement session, the sensing group key may be a common key distributed by the access point to multiple stations in the sensing measurement session negotiation. In some implementations, the sensing group key may be used for a sensing measurement exchange corresponding to the sensing measurement session. In other words, the sensing group key may be used to encrypt the sensing measurement exchange corresponding to the sensing measurement session.

Generally speaking, a life cycle of such a sensing group key follows a life cycle of the sensing measurement session, that is, the sensing group key becomes invalid in response to the life cycle of the sensing measurement session ending.

Currently, the distribution of such a sensing group key may be completed by an encrypted sensing measurement session request frame and an encrypted sensing measurement session response frame. Generally, the sensing group key only needs to be distributed once for one sensing measurement session. Therefore, generating the first sensing random bitstream based on the sensing group key, helps to reduce the transmission overhead required for exchanging parameters for generating the first sensing random bitstream between devices.

Taking an example in which the sensing group key is the key for the sensing measurement exchange, the sensing group key may be a common key distributed by the access point to multiple stations in the sensing measurement exchange (or a sensing measurement instance). In some implementations, the sensing group key may be used for a sensing measurement exchange that is currently performed, or the sensing group key may be used for a sensing measurement exchange that is to be performed next time.

Generally speaking, a life cycle of such a sensing group key follows a life cycle of the sensing measurement exchange. That is, the sensing group key becomes invalid in response to the life cycle of the sensing measurement exchange ending.

In the embodiments of the present disclosure, the first key being determined based on the sensing group key mentioned above, may include that the first key is the sensing group key, or that the first key is a key obtained from processing the sensing group key. For example, the first key may be a key derived from the sensing group key.

Currently, the distribution of such a sensing group key may be completed by a dedicated encrypted control frame or a dedicated encrypted management frame. Generally, a re-distribution of the sensing group key is required for each sensing measurement session, therefore, since the first sensing random bitstream is generated based on the sensing group key, the first sensing random bitstream will be updated as the sensing group key updates. That is, the first sensing random bitstream may be updated in each sensing measurement exchange, which helps to improve the security of the first sensing measurement signal.

In some implementations, the above-mentioned pairwise key may be specific to each station. Generally, a key common to the access point and one or more stations may be referred to as a pairwise key.

The pairwise key is not specifically limited in the embodiments of the present disclosure. A specific form of the pairwise key may be different in different scenarios. In some implementations, the pairwise key may be a PTK, and accordingly, the first key being determined based on the PTK, may include that the first key is the PTK, or that the first key is a key obtained from processing the PTK. In some implementations, the first key may be a key derived from the PTK. For example, in a case where the key derived from the PTK is a current key TK, the first key may be the TK. For another example, in a case where the key derived from the PTK is a KDK, the first key may be the KDK. In other implementations, the pairwise key may be the group key. The pairwise key in different scenarios will be described below by way of examples.

It is assumed that in the trigger frame-based sensing measurement (e.g., TF sounding phase - SR2SR variant), the above-mentioned pairwise key may be a key common to the AP and multiple stations, and for example, the pairwise key may be the group key or a same key derived from the group key.

It shall be noted that the above solution of generating the PTK based on the group key may not be applicable to the station-to-station (SR2SR) sensing measurement involving a non-associated station, because in the station-to-station sensing measurement involving the non-associated station, the access point usually does not distribute the group key to the non-associated station. Certainly, if the non-associated station may obtain the group key in the station-to-station sensing measurement involving the non-associated station, the solution of generating the PTK based on the group key may also be applicable.

It is assumed that in the triggered frame-based sensing measurement (for example, in the NDPA sounding phase), the access point transmits an HE-LTF user block to different stations, the HE-LTF user block is generated according to a key corresponding to a respective station, and the HE-LTF user block is located in different time domain and/or spatial domain positions (indicated by the NDPA transmitted by the access point before the NDP) of the sensing measurement signal (e.g., HE-LTF in the NDP). Accordingly, the station may determine an HE-LTF user block corresponding to the station itself according to an indication in the NDPA previously received, therefore, the station may parse the HE-LTF user block by using its own key, where parsing the HE-LTF user block is by the pairwise key.

For the trigger frame-based sensing measurement, in the TF sounding phase - SR2SI variant, the access point indicates sensing measurement signal (i.e., LTF in NDP) stream information (i.e., spatial domain position) transmitted by the access point to different stations in the SR2SI sounding trigger frame, the stations transmit sensing measurement signals on different streams (i.e., spatial positions) according to the indication, and the access point can determine stations corresponding to different streams according to the indication previously transmitted by the access point itself, thereby determining a corresponding key for parsing the sensing measurement signal on different streams to obtain the pairwise key.

It is assumed that in the trigger frame-based sensing measurement (e.g., TF sounding phase - SR2SR variant), the multiple stations can determine that the phase of TF sounding phase - SR2SR variant is being performed, by the SR2SR measurement trigger frame transmitted by the access point. Therefore, the sensing transmitter may determine to use the common group key to transmit the sensing measurement signal, and accordingly, other stations and the access point may determine to use the common group key to parse the sensing measurement signal, where the group key is the pairwise key.

It is assumed that in non-trigger frame-based sensing measurement, the above-mentioned pairwise key may use a key common to the access point and a single station. In this case, the pairwise key may be a PTK, or the pairwise key may be a TK derived from the pairwise transient key, or the pairwise key may be a KDK derived from the pairwise transient key.

In some implementations, the above-mentioned peer-to-peer pairwise key may be specific to each pair of stations. Generally, a key common to a station and a station may be referred to as the peer-to-peer pairwise key.

In the embodiments of the present disclosure, the first key being determined based on the peer-to-peer pairwise key, may include that the first key is the peer-to-peer pairwise key, or that the first key is a key obtained from processing the peer-to-peer pairwise key. For example, the first key may be a key derived from the peer-to-peer pairwise key.

In the embodiments of the present disclosure, in a scenario where both the first device and the second device are stations, generating the first sensing random bitstream based on the peer-to-peer pairwise key helps the second device to obtain the first sensing random bitstream and parse the first sensing measurement signal based on the first sensing random bitstream.

If the first parameter includes the first sequence information, in some implementations, the first sequence information is determined based on one or more of: a random number; a value of a first counter; and a random sequence with a pre-defined length.

In some implementations, the first sequence information is determined based on the value of the first counter (or a value of a character string corresponding to the first counter). As described above, the first sensing measurement signal may be an LTF, and accordingly, the first counter used to generate the first sensing measurement signal may also be referred to as a sensing LTF counter "Sensing-LTF-Counter".

In some implementations, the value of the first counter may change as the number of sensing measurement exchanges changes. That is, the first sensing measurement signal is one of multiple sensing measurement signals transmitted in multiple sensing measurement exchanges, and a respective value of the first counter corresponding to each sensing measurement signal in the multiple sensing measurement exchanges is different.

The change of the value of the first counter is not limited in the embodiments of the present disclosure. In some implementations, the respective value of the first counter corresponding to each sensing measurement signal in multiple sensing measurement exchanges may increase as the number of sensing measurement exchanges increases. For example, as the number of sensing measurement exchanges increases, the value of the first counter increases by a variation Δ1, where the variation Δ1 may be an integer greater than or equal to 1.

In some other implementations, the respective value of the first counter corresponding to each sensing measurement signal in the multiple sensing measurement exchanges decreases as the number of sensing measurement exchanges increases. For example, as the number of sensing measurement exchanges increases, the value of the first counter decreases by a variation Δ2, where the variation Δ2 may be an integer greater than or equal to 1.

The solution of determining the first sequence information based on the value of the first counter is not limited in the embodiments of the present disclosure. For example, the value of the first counter may be directly used as a sequence for generating the first sensing measurement bitstream, i.e., the first sequence information. For another example, the value of the first counter may be processed, and the processed first sequence information may be used as the sequence for generating the first sensing measurement bitstream, i.e., the first sequence information.

Certainly, the mode of generating the first sequence information is not limited in the embodiments of the present disclosure. For example, the first sequence information may be generated based on the random number. For another example, the first sequence information may be generated based on the random sequence.

Parameters (the first key, the first sequence information, and the identifier of the first sensing measurement signal) used to generate the first random bitstream in the embodiments of the present disclosure are described above. In the embodiments of the present disclosure, these parameters may be used separately to generate the first random bitstream. Certainly, these parameters may also be used in combination with each other to generate the first random bitstream. For ease of understanding, a description is made below with reference to Embodiment 1 by taking an example in which these parameters are used in combination with each other to generate the first random bitstream.

### Embodiment 1

Step 1: generate a sensing LTF key seed "Sensing-LTF-Key-Seed" based on the first key.

In some implementations, the sensing LTF key seed "Sensing-LTF-Key-Seed" may be generated based on Formula 1: Sensing-LTF-Key-Seed = HMAC-Hash (Key, "Sensing LTF key seed").

HMAC denotes a key-based hash method for message authentication (referring to the specification of the IETF RFC 2104 standard). Hash denotes a specific hash function, and accordingly, HMAC-Hash (key, massage) denotes a hash function in a form of HMAC, key denotes the first key, and the information "massage" denotes a message content to be authenticated, i.e., the sensing LTF key seed "Sensing LTF key seed" in Formula 1.

For example, the above-mentioned Formula 1 may be expressed as: HMAC-SHA-256 (GTK, "Sensing LTF key seed"), where SHA-256 denotes a hash function with an output length of 256 bits, GTK denotes that the first key is the GTK, and the character string "Sensing LTF key seed" denotes that the message content to be authenticated is the sensing LTF key seed.

Step 2: generate sensing LTF key material "Sensing-LTF-Key-Material" based on the sensing LTF key seed "Sensing-LTF-Key-Seed".

In some implementations, the sensing LTF key material "Sensing-LTF-Key-Material" may be generated based on Formula 2: Sensing-LTF-Key-Material= KDF-Hash-Length (Sensing-LTF-Key-Seed, "Sensing LTF Expansion", Sensing-LTF-Counter).

KDF-Hash-Length (K, Label, Context) denotes a pseudo-random method used to derive the key. Hash denotes the specific hash function. Length denotes a length of the derived key. K denotes the key, i.e., the sensing LTF key seed "Sensing-LTF-Key-Seed". Label denotes a usage of the derived key, i.e., denotes being used for sensing LTF enhancement. Context is used to indicate a context used for the derivation, i.e., the value of the first counter, Sensing-LTF-Counter.

For example, the above-mentioned Formula 2 may be expressed as: KDF-SHA-256 (Sensing-LTF-Key-Seed, "Sensing LTF Expansion", Sensing-LTF-Counter). SHA-256 denotes a hash function with an output length of 256 bits. Sensing-LTF-Key-Seed denotes that the key is the sensing LTF key seed. The character string "Sensing LTF Expansion" denotes that the usage of the derived key is sensing LTF enhancement. Sensing-LTF-Counter denotes that the context used for the derivation is the value of the first counter.

Step 3: generate the sensing LTF key "Sensing-LTF-Key" based on the sensing LTF key material "Sensing-LTF-Key-Material".

In some implementations, the sensing LTF key "Sensing-LTF-Key" may be generated based on Formula 3: Sensing-LTF-Key = L(Sensing-LTF-Key-Material, 0, 128). The Formula 3 indicates that data with a length of 128 bits truncated starting from the 0th bit of the sensing LTF key material Sensing-LTF-Key-Material is used as the sensing LTF key.

The length of the sensing LTF key is not limited in the embodiments of the present disclosure. For example, the length of the sensing LTF key may be 128 bits as described above. For another example, the length of the sensing LTF key may be 256 bits as described above.

Step 4: generate a sensing input value "Sensing-Input-Value" based on the identifier "LTF-ID" of the first sensing measurement signal, the first counter "Sensing-LTF-Counter", and the block counter.

In some implementations, the sensing input value "Sensing-Input-Value" may be generated based on Formula 4: Sensing-Input-Value = LTF-ID ∥ Sensing-LTF-Counter ∥ block counter.

The character '∥' denotes a connection operation on two byte streams. LTF-ID denotes the identifier of the first sensing measurement signal. Sensing-LTF-Counter denotes a string form of a value of an integer first counter Sensing-LTF-Counter. The block counter denotes a string form of a value of a counter used to record the block number during encryption.

Lengths of the above parameters are not limited in the embodiments of the present disclosure. For example, the length of the sensing input value "Sensing-Input-Value" may be 16 octets, the length of the identifier of the first sensing measurement signal (LTF-ID) may be 6 octets, the string length of the first counter may be 6 octets, and the character string length of the block counter may be 4 octets. Certainly, the lengths of the above parameters may also be other values, which is not limited in the embodiments of the present disclosure.

The counting rule of the block counter is not limited in the embodiments of the present disclosure. For example, the value of the block counter may be initialized to 0 each time the encryption starts, and after each block of data is output in the encryption process, the value of the block counter may be increased by a variation Δ3. For another example, the value of the block counter may be initialized to a target value (a value greater than or equal to 0) each time the encryption starts, and after each block of data is output in the encryption process, the value of the block counter decreases by a variation Δ4 on the basis of the target value.

In addition, the values of the above variations are not limited in the embodiments of the present disclosure. For example, the value of the variation Δ3 may be 1, and in this case, after each block of data is output in the encryption process, the value of the block counter increases by 1. For another example, the value of the variation Δ4 may be 1, and in this case, after each block of data is output in the encryption process, the value of the block counter decreases by 1. Certainly, in the embodiments of the present disclosure, the values of the variation Δ3 and/or the variation Δ4 mentioned above may be 2. Alternatively, the values of the variation Δ3 and/or the variation Δ4 mentioned above may be 3.

It shall also be noted that in a case where the length of the above parameter is less than a preset parameter length, the parameter may be padded with the escape character '\0'. For example, in a case where a length of a character string corresponding to the value of the first counter "Sensing-LTF-Counter" is less than 6 bytes, the header or tail of the character string corresponding to the value 149 of the first counter "Sensing-LTF-Counter" may be padded with the escape character '\0'.

Step 5: generate first sensing random bitstream "Sensing-Random-Bits" based on the sensing input value "Sensing-Input-Value", the sensing LTF key "Sensing-LTF-Key" and the block counter.

In some implementations, the first sensing random bitstream may be generated based on Formula 5: Sensing-Random-Bits = AES-128-CTR (Sensing-LTF-Key, Sensing-Input-Value, block counter).

AES-128-CTR denotes a symmetric encryption algorithm (advanced encryption standard, AES) in a counter mode, with an output length of 128 bits (referring to the introduction of the FIPS 197 standard). Sensing-LTF-Key denotes the sensing LTF key, and Sensing-Input-Value denotes a plaintext to be encrypted, i.e., a sensing input value.

It shall be noted that after each encryption is completed (for example, 128 bits of output are generated for each time), the block counter and the sensing input value "Sensing-Input-Value" may be updated, where the updating of the "block counter" may refer to the description in step 4, and the updating of the sensing input value "Sensing-Input-Value" may be updated based on the change of the first counter, where the change of the first counter may refer to the above introduction of the first counter.

As described above, for the sensing receiver (i.e., the second device), the first sensing random bitstream is used to parse the first sensing measurement signal. That is, the sensing receiver may parse the first sensing measurement signal based on the first sensing random bitstream. Therefore, parameters (i.e., the first parameter(s) described above) used to generate the first sensing random bitstream are what both the first device and the second device need to know. That is, before step S910, the method further includes that: the first device transmits the first parameter to the second device.

In some implementations, for the case where the first parameter includes the first key, the first key may be obtained by the first device and the second device through a process such as the sensing measurement exchange or the sensing measurement negotiation. For the case where the first parameter includes the identifier of the first sensing measurement signal, the identifier of the first sensing measurement signal may be obtained by the first device and the second device through a process such as the sensing measurement exchange or the sensing measurement negotiation. For the case where the first parameter includes the first counter, the first device needs to indicate the first counter to the second device, so that the second device may know the first counter.

In some implementations, the first parameter is carried in one or more of: a sensing polling trigger frame; an NDPA frame; a sensing responder to sensing initiator (SR2SI) measurement trigger frame; and a sensing responder to sensing responder (SR2SR) measurement trigger frame.

In the embodiments of the present disclosure, since the above messages are all transmitted before the first sensing measurement signal, the first parameter may be used to generate the first sensing measurement signal transmitted in the sensing measurement exchange process in which these messages are involved. That is, the first parameter and the first sensing measurement signal generated based on the first parameter are transmitted in a same sensing measurement exchange process. Therefore, the transmission of the first parameter may also be referred to as an "instant transmission".

For example, in the non-trigger frame-based sensing measurement, the first counter "Sensing-LTF-Counter" may be generated by the sensing initiator and indicated in the NDPA frame, where the sensing initiator may be a non-access point station.

In some other implementations, the first parameter may be transmitted through a second sensing measurement exchange process, the second sensing measurement exchange is performed before the first sensing measurement exchange, and the first sensing measurement exchange corresponds to the first sensing measurement signal. That is, the first parameter is transmitted in other sensing measurement exchange(s) that is performed before the sensing measurement exchange in which the first sensing measurement signal is involved.

The first sensing measurement exchange and the second sensing measurement exchange are not limited in the embodiments of the present disclosure. For example, the second sensing measurement exchange may be a previous sensing measurement exchange of the first sensing measurement exchange, and in this case, the transmission process of the first parameter may also be referred to as an "once-in-advance indication". Certainly, in the embodiments of the present disclosure, the second sensing measurement exchange may be the N previous sensing measurement exchanges of the first sensing measurement exchange, where the value of N may be greater than 1.

In some implementations, the first parameter is carried in one or more of information as follows: a sensing polling trigger frame; an NDPA frame; an SR2SI sensing trigger frame; an SR2SR sensing trigger frame; a sensing reporting trigger frame; a threshold-based sensing reporting trigger frame; and a sensing measurement result reporting frame (also referred to as "sensing measurement reporting frame").

In the embodiments of the present disclosure, the first parameter is transmitted through the second sensing measurement exchange and is used to generate the first sensing measurement signal in the first sensing measurement exchange. Therefore, any information in the second sensing measurement exchange (for example, one or more of the information described above) may be used to transmit the first parameter, and accordingly, the sensing measurement signal receiver has sufficient time to generate the first random sensing bitstream based on the first parameter.

For example, in the trigger frame-based sensing measurement, the first counter "Sensing-LTF-Counter" may be generated by the sensing initiator (e.g., the access point) and carried in one or more of information as follows: the sensing polling trigger frame; the NDPA frame; the SR2SI sensing trigger frame; the SR2SR sensing trigger frame; the sensing reporting trigger frame; the threshold-based sensing reporting trigger frame; and the sensing measurement result reporting frame.

For another example, in the non-trigger frame-based sensing measurement, the first counter "Sensing-LTF-Counter" may be generated by the sensing initiator (e.g., the non-access point station) and indicated in the NDPA frame.

As described above, the first parameter transmitted in the second sensing measurement exchange is used to generate the first sensing measurement signal transmitted in the first sensing measurement exchange. Therefore, the second device and/or the first device needs to determine, based on the sensing measurement exchange in which the first parameter is transmitted, a sensing measurement exchange in which the first sensing measurement signal generated based on the first parameter is involved. In some implementations, the sensing measurement exchange in which the first sensing measurement signal generated based on the first parameter is involved may be determined based on an identifier of the sensing measurement exchange.

It is assumed that the first sensing measurement exchange is a next sensing measurement exchange of the second sensing measurement exchange. In this case, the second device may first determine that an identifier of the sensing measurement exchange for transmitting the first parameter is M. Afterwards, the second device may determine that the first sensing measurement signal generated based on the first parameter is transmitted through the sensing measurement exchange with an identifier of M+1. Finally, by using the first parameter, the second device may parse the first sensing measurement signal transmitted in the sensing measurement exchange with the identifier of M+1.

The mode of obtaining the identifier of the sensing measurement exchange by the first device or the second device is not limited in the embodiments of the present disclosure. For example, the identifier of the sensing measurement exchange may be carried in a measurement session identifier (measurement session ID) field in the NDPA frame. For another example, the identifier of the sensing measurement exchange may be determined based on a measurement exchange identifier (measurement exchange ID) in a sounding dialog token number field. For another example, the identifier of the sensing measurement exchange may be determined based on a measurement exchange identifier carried in the SR2SR measurement trigger frame. For another example, the identifier of the sensing measurement exchange may be determined based on a measurement exchange identifier carried in the SR2SI measurement trigger frame.

The definition of the identifier of the sensing measurement exchange is not limited in the embodiments of the present disclosure. In some implementations, a value range of the identifier of the sensing measurement exchange may be 0 to 63, and the identifier is increased by 1 after each sensing measurement exchange. Generally, the identifier may be returned to 0 and recalculated, if the value of the identifier increases to 63.

In some implementations, a sensing measurement session identifier corresponding to the measurement exchange may also be carried in one or more of the NDPA frame, the sounding dialog token number field, the SR2SR measurement trigger frame, and the SR2SI measurement trigger frame, so that the first device and/or the second device determine the sensing measurement session to which the sensing measurement exchange belongs.

In some scenarios, the sensing initiator will transmit the first counter "Sensing-LTF-Counter" to the sensing responder. However, a certain sensing responder may not receive one or more first counters "Sensing-LTF-Counter" due to sleep or temporary loss of network connection (e.g., network flash disconnection). Accordingly, the sensing responder may determine that the first counter is lost by itself according to the identifier of the sensing measurement exchange, and in this case, the sensing responder may continue to participate in this sensing measurement to obtain a first counter required for a next sensing measurement, and the sensing responder may indicate that this measurement result is invalid in this sensing measurement report. Certainly, in the embodiments of the present disclosure, for the sensing responder not receiving the first counter, the sensing responder may only monitor and receive a frame transmitted in this measurement to obtain a first counter required for a next sensing measurement, but do not participate in this sensing measurement.

Generally, the trigger frame and NDPA frame, etc., mentioned above are all control frames, and frame bodies thereof are transmitted by the plaintext. Therefore, the first counter "Sensing-LTF-Counter" carried in the frame is also transmitted by the plaintext. In this case, the input value "Input-Value" may be known. Therefore, an attack on the first counter (e.g., attacked by a 'known plaintext attack') may result in the first sensing random bitstream generated based on the first counter being obtained.

In order to improve the security of the first sensing random bitstream, a random sequence distributed by the access point to multiple stations in the sensing measurement session negotiation may be used for the identifier of the first sensing measurement signal. Since the transmission of information in the sensing measurement session negotiation is encrypted, the identifier of the first sensing measurement signal is encrypted, thereby helping to improve the security of the first random bit sequence.

Certainly, in the embodiments of the present disclosure, in order to improve the security of the first sensing random bitstream, the above-mentioned frame body carrying the first counter may be encrypted, or the value of the first counter carried in the above-mentioned frame body may be encrypted. For example, the trigger frame and/or the NDPA frame may be encrypted. For another example, a field (e.g., a sensing LTF counter (Sensing-LTF-Counter) field) carrying the value of the first counter in the trigger frame and/or the NDPA frame may be encrypted.

For ease of understanding, the transmission process of the first parameter in the embodiments of the present disclosure will be described below with reference to FIG. 10 and FIG. 11. As shown in FIG. 10 and FIG. 11, the first device may be a sensing initiator, and the second device may be a sensing responder.

FIG. 10 is a schematic diagram illustrating a transmission process of a first parameter in the embodiments of the present disclosure. The method shown in FIG. 10 includes step S1010 to step S1020.

In step S1010, the sensing initiator transmits a sensing measurement session request to the sensing responder.

In some implementations, the sensing measurement session request carries one or more of: a sensing group key, an LTF-ID, and first sequence information.

In step S1020, the sensing responder transmits a sensing measurement session response message to the sensing initiator.

FIG. 11 is a schematic diagram illustrating a transmission process of a first parameter in another embodiment of the present disclosure. The method shown in FIG. 11 includes step S1110 to step S1140. The solution shown in FIG. 11 includes two sensing measurement exchange processes, i.e., sensing measurement exchange process 1 and sensing measurement exchange process 2. The sensing measurement exchange process 1 includes step S1110 to step S1124. The sensing measurement exchange process 2 includes step S1126 to step S1140.

In step S1110, the sensing initiator transmits a sensing polling trigger frame 1 to the sensing responder.

In some implementations, the sensing polling trigger frame 1 includes first sequence information 2, where the first sequence information 2 is used to parse a sensing measurement signal 2 transmitted in the sensing measurement exchange 2.

In step S1112, the sensing responder transmits an allow-to-transmit frame 1 to the sensing initiator, to allow the sensing initiator to transmit the NDPA frame 1.

In step S1114, the sensing initiator transmits an NDPA frame 1 to the sensing responder.

In step S1116, the sensing initiator transmits an SI2SR NDP1 to the sensing responder.

In some implementations, the SI2SR NDP1 carries a sensing measurement signal 1, and the sensing measurement signal 1 is generated based on first sequence information 1 set in a sensing measurement session.

In step S1118, the sensing initiator transmits an SR2SI measurement trigger frame 1 to the sensing responder.

In step S1120, the sensing responder transmits an SR2SI NDP1 to the sensing initiator.

In some implementations, the SI2SR NDP1 carries the sensing measurement signal 1, and the sensing measurement signal 1 is generated based on first sequence information set in the sensing measurement session.

In step S1122, the sensing initiator transmits a sensing reporting trigger frame 1 to the sensing responder.

In step S1124, the sensing responder transmits a sensing measurement reporting frame 1 to the sensing initiator.

In step S1126, the sensing initiator transmits a sensing polling trigger frame 2 to the sensing responder.

In some implementations, the sensing polling trigger frame 2 includes first sequence information 3, and the first sequence information 3 is used to parse a sensing measurement signal 3 transmitted in a sensing measurement exchange 3.

In step S1128, the sensing responder transmits an allow-to-transmit frame 2 to the sensing initiator, to allow the sensing initiator to transmit the NDPA frame 2.

In step S1130, the sensing initiator transmits an NDPA frame 2 to the sensing responder.

In step S1132, the sensing initiator transmits an SI2SR NDP2 to the sensing responder.

In some implementations, the SI2SR NDP2 carries a sensing measurement signal 2, and the sensing measurement signal 2 is generated based on the first sequence information 2 transmitted in step S1110 in the sensing measurement exchange 1.

In step S1134, the sensing initiator transmits an SR2SI measurement trigger frame 2 to the sensing responder.

In step S1136, the sensing responder transmits an SR2SI NDP2 to the sensing initiator.

In some implementations, the SI2SR NDP2 carries the sensing measurement signal 2, and the sensing measurement signal 2 is generated based on the first sequence information 2 transmitted in step S1110 in the sensing measurement exchange 1.

In step S1138, the sensing initiator transmits a sensing reporting trigger frame 2 to the sensing responder.

In step S1140, the sensing responder transmits a sensing measurement reporting frame 2 to the sensing initiator.

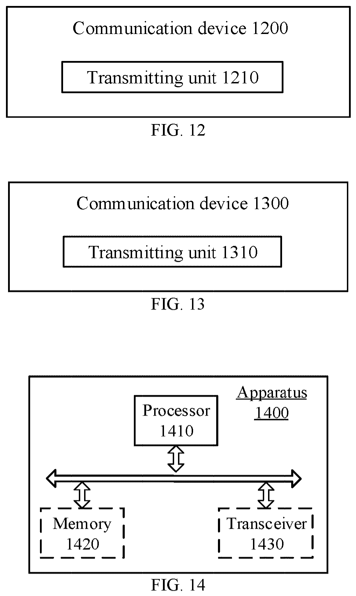

The method embodiments of the present disclosure are described in detail above with reference to FIG. 1 to FIG. 11, and the apparatus embodiments of the present disclosure will be described in detail below with reference to FIG. 12 to FIG. 14. It shall be understood that the description of the method embodiments corresponds to the description of the apparatus embodiments. Therefore, for parts that are not described in detail, reference may be made to the previous method embodiments.

FIG. 12 is a schematic diagram of a communication device in the embodiments of the present disclosure. The communication device 1200 shown in FIG. 12 is a first device, and the communication device 1200 includes: a transmitting unit 1210.

The transmitting unit 1210 is configured to transmit a first sensing measurement signal to a second device, where the first sensing measurement signal is obtained based on a first sensing random bitstream, and the first sensing random bitstream is generated based on one or more of first parameters as follows: a first key; first sequence information; and an identifier of the first sensing measurement signal.

In some implementations, in a case where the first parameter(s) include the identifier, the identifier is determined based on one or more of: a medium access control (MAC) address of the first device; an identifier of a basic service set (BSS) to which the first device belongs; a sensing measurement session identifier corresponding to the first sensing measurement signal; a sensing measurement exchange identifier corresponding to the first sensing measurement signal; and a first random sequence, the first random sequence being a random sequence obtained by a station from an access point during a sensing session negotiation.

In some implementations, in a case where the first parameter includes the first key, the first key is determined based on one or more of: a group key; a sensing group key; a pairwise key; and a peer-to-peer pairwise key.

In some implementations, in a case where the first key includes the sensing group key, the sensing group key is used to encrypt a sensing measurement exchange corresponding to a sensing measurement session; or the sensing group key is used to encrypt a sensing measurement exchange corresponding to a sensing measurement instance.

In some implementations, in a case where the first parameter includes the first sequence information, the first sequence information is determined based on one or more of: a random number; a value of a first counter; and a random sequence with a pre-defined length.

In some implementations, in a case where the first sequence information is determined based on the value of the first counter, the first sensing measurement signal is one of a plurality of sensing measurement signals transmitted in a plurality of sensing measurement exchanges, and a respective value of a first counter corresponding to each sensing measurement signal among the plurality of sensing measurement exchanges is different.

In some implementations, the respective value of the first counter corresponding to each sensing measurement signal among the plurality of sensing measurements increases as a number of sensing measurement exchanges increases; or the respective value of the first counter corresponding to each sensing measurement signal among the plurality of sensing measurement exchanges decreases as a number of sensing measurement exchanges increases.

In some implementations, the transmitting unit is further configured to transmit the first parameter to the second device.

In some implementations, the first parameter is carried in one or more of: a sensing polling trigger frame; a sensing measurement announcement (NDPA) frame; a sensing responder to sensing initiator (SR2SI) measurement trigger frame; and a sensing responder to sensing responder (SR2SR) measurement trigger frame.

In some implementations, the first parameter is transmitted through a process of a second sensing measurement exchange, the second sensing measurement exchange is performed before a first sensing measurement exchange, and the first sensing measurement exchange corresponds to the first sensing measurement signal.

In some implementations, the first parameter is carried in one or more of information as follows: a sensing polling trigger frame; a sensing measurement announcement (NDPA) frame; a sensing responder to sensing initiator (SR2SI) sensing trigger frame; a sensing responder to sensing responder (SR2SR) sensing trigger frame; a sensing reporting trigger frame; a threshold-based sensing reporting trigger frame; and a sensing measurement result reporting frame.

FIG. 13 is a schematic diagram of a communication device in the embodiments of the present disclosure. The communication device 1300 shown in FIG. 13 is a second device, and the communication device 1300 may include a receiving unit 1310.

The receiving unit 1310 is configured to receive a first sensing measurement signal transmitted by a first device, where the first sensing measurement signal is obtained based on a first sensing random bitstream, and the first sensing random bitstream is generated based on one or more of first parameters as follows: a first key; first sequence information; and an identifier of the first sensing measurement signal.

In some implementations, in a case where the first parameter includes the identifier, the identifier is determined based on one or more of: an MAC address of the first device; an identifier of a basic service set (BSS) to which the first device belongs; a sensing measurement session identifier corresponding to the first sensing measurement signal; a sensing measurement exchange identifier corresponding to the first sensing measurement signal; and a first random sequence, the first random sequence being a random sequence obtained by a station from an access point during a sensing session negotiation.

In some implementations, in a case where the first parameter includes the first key, the first key is determined based on one or more of: a group key; a sensing group key; a pairwise key; and a peer-to-peer pairwise key.

In some implementations, in a case where the first key includes the sensing group key, the sensing group key is used to encrypt a sensing measurement exchange corresponding to a sensing measurement session; or the sensing group key is used to encrypt a sensing measurement exchange corresponding to a sensing measurement instance.

In some implementations, in a case where the first parameter includes the first sequence information, the first sequence information is determined based on one or more of: a random number; a value of a first counter; and a random sequence with a pre-defined length.

In some implementations, in a case where the first sequence information is determined based on the value of the first counter, the first sensing measurement signal is one of a plurality of sensing measurement signals transmitted in a plurality of sensing measurement exchanges, and a respective value of a first counter corresponding to each sensing measurement signal among the plurality of sensing measurement exchanges is different.

In some implementations, the respective value of the first counter corresponding to each sensing measurement signal among the plurality of sensing measurements increases as a number of sensing measurement exchanges increases; or the respective value of the first counter corresponding to each sensing measurement signal among the plurality of sensing measurement exchanges decreases as a number of sensing measurement exchanges increases.

In some implementations, the receiving unit is further configured to receive the first parameter transmitted by the first device.

In some implementations, the first parameter is carried in one or more of: a sensing polling trigger frame; a sensing measurement announcement (NDPA) frame; a sensing responder to sensing initiator (SR2SI) measurement trigger frame; and a sensing responder to sensing responder (SR2SR) measurement trigger frame.

In some implementations, the first parameter is transmitted through a process of a second sensing measurement exchange, the second sensing measurement exchange is performed before a first sensing measurement exchange, and the first sensing measurement exchange corresponds to the first sensing measurement signal.

In some implementations, the first parameter is carried in one or more of information as follows: a sensing polling trigger frame; a sensing measurement announcement (NDPA) frame; a sensing responder to sensing initiator (SR2SI) sensing trigger frame; a sensing responder to sensing responder (SR2SR) sensing trigger frame; a sensing reporting trigger frame; a threshold-based sensing reporting trigger frame; and a sensing measurement result reporting frame.

In an optional embodiment, the transmitting unit 1210 may be a transceiver 1430. The communication device 1200 may further include a processor 1410 and a memory 1420, as specifically shown in FIG. 14.

In an optional embodiment, the transmitting unit 1310 may be a transceiver 1330. The communication device 1300 may further include a processor 1410 and a memory 1420, as specifically shown in FIG. 14.

FIG. 14 is a schematic structural diagram illustrating a communication apparatus in the embodiments of the present disclosure. The dashed lines in FIG. 14 indicate that a unit or module is optional. The apparatus 1400 may be configured to implement the method described in the above method embodiments. The apparatus 1400 may be a chip, a terminal device or a network device.

The apparatus 1400 may include one or more processors 1410. The processor 1410 may support the apparatus 1400 to implement the method described in the above method embodiments. The processor 1410 may be a general-purpose processor or a dedicated-purpose processor. For example, the processor may be a central processing unit (CPU). Alternatively, the processor may also be other general-purpose processor, a digital signal processor (DSP), an application specific integrated circuit (ASIC), a field programmable gate array (FPGA) or other programmable logic device, a discrete gate or transistor logic device, a discrete hardware component, etc. The general-purpose processor may be a microprocessor, or the processor may also be any conventional processor or the like.

The apparatus 1400 may further include one or more memories 1420. The memory 1420 stores a program thereon, and the program may be executed by the processor 1410, to cause the processor 1410 to perform the method described in the above method embodiments. The memory 1420 may be independent of the processor 1410 or may be integrated into the processor 1410.

The apparatus 1400 may further include a transceiver 1430. The processor 1410 may communicate with other devices or chips through the transceiver 1430. For example, the processor 1410 may transmit and receive data with other devices or chips through the transceiver 1430.

The embodiments of the present disclosure further provide a computer-readable storage medium for storing a program. The computer-readable storage medium may be applied to the terminal device or the network device provided in the embodiments of the present disclosure, and the program causes a computer to perform the method performed by the terminal device or the network device in various embodiments of the present disclosure.

The embodiments of the present disclosure further provide a computer program product. The computer program product includes a program. The computer program product may be applied to the terminal device or the network device provided in the embodiments of the present disclosure, and the program causes a computer to perform the method performed by the terminal device or the network device in various embodiments of the present disclosure.

The embodiments of the present disclosure further provide a computer program. The computer program may be applied to the terminal device or the network device provided in the embodiments of the present disclosure, and the computer program causes a computer to perform the method performed by the terminal device or the network device in various embodiments of the present disclosure.

It shall be understood that the terms "system" and "network" in the present disclosure may be used interchangeably. Furthermore, the terms used in the present disclosure are only used to explain the specific embodiments of the present disclosure, but are not intended to limit the present disclosure. The terms "first," "second," "third," "fourth" and the like in the specification, claims and drawings of the present disclosure are used to distinguish different objects, rather than to describe a specific order. In addition, the terms "include/comprise" and "has/have" and any variations thereof, are intended to cover the non-exclusive inclusion.

In the embodiments of the present disclosure, the "indicate/indicated/indicating/indication" mentioned may be a direct indication, an indirect indication, or may also indicate that there is an associated relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an associated relationship between A and B.

In the embodiments of the present disclosure, "B corresponding to A" means that B is associated with A, and B may be determined based on A. However, it shall also be understood that determining B based on A does not mean determining B based on A only, and B may also be determined based on A and/or other information.

In the embodiments of the present disclosure, the term "correspond/corresponding/correspondence" may indicate a direct correspondence or an indirect correspondence between two items, or may mean that there is an associated relationship between the two items, or may mean a relationship of indicating and being indicated, or a relationship of configuring and being configured, or the like.

In the embodiments of the present disclosure, the "predefined" or "pre-configured" and variations thereof may be implemented by pre-saving corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the term "protocol" may refer to a standard protocol in the field of communications, and for example, the "protocol" may include an LTE protocol, an NR protocol, and a related protocol used in a future communication system, which is not limited in present disclosure.

In the embodiments of the present disclosure, the term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

In various embodiments of the present disclosure, values of serial numbers of the aforementioned processes do not mean an execution order, and the execution order of each process shall be determined by its function and internal logic, and shall not impose any limitation on the implementation process of the embodiments of the present disclosure.

It shall be understood that the disclosed systems, apparatuses, and methods in several embodiments provided in the present disclosure may be implemented in other modes. For example, the apparatus embodiments described above are merely exemplary, and for example, a division of units is merely a division based on logical functions, while other divisions exist in actual implementations. For example, a plurality of units or components may be combined or integrated into another system, or some features may be omitted or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

All or part of the above embodiments may be implemented by software, hardware, firmware or any combination thereof. When implemented by using software, all or part of the embodiments may be implemented in a form of a computer program product. The computer program product includes one or more computer instructions. When the computer program instructions are loaded and executed on a computer, all or part of the procedures or functions described according to the embodiments of the present disclosure are generated. The computer may be a general-purpose computer, a dedicated-purpose computer, a computer network, or other programmable apparatuses. The computer instructions may be stored in a computer-readable storage medium, or transmitted from a computer-readable storage medium to another computer-readable storage medium. For example, the computer instructions may be transmitted from a website, a computer, a server, or a data center to another website, another computer, another server, or another data center via a wired mode (e.g., a coaxial cable, optical fiber, a digital subscriber line (DSL)) or a wireless mode (e.g., an infrared, radio, microwave, etc.). The computer-readable storage medium may be any available medium that can be read by a computer, or a data storage device including a server or a data center integrated with one or more available media, etc. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

## Claims

1. A wireless communication method, comprising:
transmitting, by a first device, a first sensing measurement signal to a second device, wherein the first sensing measurement signal is obtained based on a first sensing random bitstream, and the first sensing random bitstream is generated based on one or more of first parameters as follows:
a first key;
first sequence information; and
an identifier of the first sensing measurement signal.

2. The method according to claim 1, wherein in a case where the first parameter comprises the identifier, the identifier is determined based on one or more of:
a medium access control (MAC) address of the first device;
an identifier of a basic service set (BSS) to which the first device belongs;
a sensing measurement session identifier corresponding to the first sensing measurement signal;
a sensing measurement exchange identifier corresponding to the first sensing measurement signal; and
a first random sequence, the first random sequence being a random sequence obtained by a station from an access point during a sensing session negotiation.

3. The method according to claim 1 or 2, wherein in a case where the first parameter comprises the first key, the first key is determined based on one or more of:
a group key;
a sensing group key;
a pairwise key; and
a peer-to-peer pairwise key.

4. The method according to claim 3, wherein in a case where the first key comprises the sensing group key, the sensing group key is used to encrypt a sensing measurement exchange corresponding to a sensing measurement session; or
the sensing group key is used to encrypt a sensing measurement exchange corresponding to a sensing measurement instance.

5. The method according to any one of claims 1 to 4, wherein in a case where the first parameter comprises the first sequence information, the first sequence information is determined based on one or more of:
a random number;
a value of a first counter; and
a random sequence with a pre-defined length.

6. The method according to claim 5, wherein in a case where the first sequence information is determined based on the value of the first counter, the first sensing measurement signal is one of a plurality of sensing measurement signals transmitted in a plurality of sensing measurement exchanges, and a respective value of a first counter corresponding to each sensing measurement signal among the plurality of sensing measurement exchanges is different.

7. The method according to claim 6, wherein the respective value of the first counter corresponding to each sensing measurement signal among the plurality of sensing measurements increases as a number of sensing measurement exchanges increases; or
the respective value of the first counter corresponding to each sensing measurement signal among the plurality of sensing measurement exchanges decreases as the number of sensing measurement exchanges increases.

8. The method according to any one of claims 1 to 7, wherein before transmitting, by the first device, the first sensing measurement signal to the second device, the method further comprises:
transmitting, by the first device, the first parameter to the second device.

9. The method according to claim 8, wherein the first parameter is carried in one or more of:
a sensing polling trigger frame;
a sensing measurement announcement (NDPA) frame;
a sensing responder to sensing initiator (SR2SI) measurement trigger frame; and
a sensing responder to sensing responder (SR2SR) measurement trigger frame.

10. The method according to claim 8, wherein the first parameter is transmitted through a process of a second sensing measurement exchange, the second sensing measurement exchange is performed before a first sensing measurement exchange, and the first sensing measurement exchange corresponds to the first sensing measurement signal.

11. The method according to claim 10, wherein the first parameter is carried in one or more of information as follows:
a sensing polling trigger frame;
a sensing measurement announcement (NDPA) frame;
a sensing responder to sensing initiator (SR2SI) sensing trigger frame;
a sensing responder to sensing responder (SR2SR) sensing trigger frame;
a sensing reporting trigger frame;
a threshold-based sensing reporting trigger frame; and
a sensing measurement result reporting frame.

12. A wireless communication method, comprising:
receiving, by a second device, a first sensing measurement signal transmitted by a first device, wherein the first sensing measurement signal is obtained based on a first sensing random bitstream, and the first sensing random bitstream is generated based on one or more of first parameters as follows:
a first key;
first sequence information; and
an identifier of the first sensing measurement signal.

13. The method according to claim 12, wherein in a case where the first parameter comprises the identifier, the identifier is determined based on one or more of:
a medium access control (MAC) address of the first device;
an identifier of a basic service set (BSS) to which the first device belongs;
a sensing measurement session identifier corresponding to the first sensing measurement signal;
a sensing measurement exchange identifier corresponding to the first sensing measurement signal; and
a first random sequence, the first random sequence being a random sequence obtained by a station from an access point during a sensing session negotiation.

14. The method according to claim 12 or 13, wherein in a case where the first parameter comprises the first key, the first key is determined based on one or more of:
a group key;
a sensing group key;
a pairwise key; and
a peer-to-peer pairwise key.

15. The method according to claim 14, wherein in a case where the first key comprises the sensing group key, the sensing group key is used to encrypt a sensing measurement exchange corresponding to a sensing measurement session; or
the sensing group key is used to encrypt a sensing measurement exchange corresponding to a sensing measurement instance.

16. The method according to any one of claims 12 to 15, wherein in a case where the first parameter comprises the first sequence information, the first sequence information is determined based on one or more of:
a random number;
a value of a first counter; and
a random sequence with a pre-defined length.

17. The method according to claim 16, wherein in a case where the first sequence information is determined based on the value of the first counter, the first sensing measurement signal is one of a plurality of sensing measurement signals transmitted in a plurality of sensing measurement exchanges, and a respective value of a first counter corresponding to each sensing measurement signal among the plurality of sensing measurement exchanges is different.

18. The method according to claim 17, wherein the respective value of the first counter corresponding to each sensing measurement signal among the plurality of sensing measurements increases as a number of sensing measurement exchanges increases; or
the respective value of the first counter corresponding to each sensing measurement signal among the plurality of sensing measurement exchanges decreases as the number of sensing measurement exchanges increases.

19. The method according to any one of claims 12 to 18, wherein before receiving, by the second device, the first sensing measurement signal transmitted by the first device, the method further comprises:
receiving, by the second device, the first parameter transmitted by the first device.

20. The method according to claim 19, wherein the first parameter is carried in one or more of:
a sensing polling trigger frame;
a sensing measurement announcement (NDPA) frame;
a sensing responder to sensing initiator (SR2SI) measurement trigger frame; and
a sensing responder to sensing responder (SR2SR) measurement trigger frame.

21. The method of claim 19, wherein the first parameter is transmitted through a process of a second sensing measurement exchange, the second sensing measurement exchange is performed before a first sensing measurement exchange, and the first sensing measurement exchange corresponds to the first sensing measurement signal.

22. The method according to claim 21, wherein the first parameter is carried in one or more of information as follows:
a sensing polling trigger frame;
a sensing measurement announcement (NDPA) frame;
a sensing responder to sensing initiator (SR2SI) sensing trigger frame;
a sensing responder to sensing responder (SR2SR) sensing trigger frame;
a sensing reporting trigger frame;
a threshold-based sensing reporting trigger frame; and
a sensing measurement result reporting frame.

23. A communication device, the communication device being a first device and comprising:
a transmitting unit, configured to transmit a first sensing measurement signal to a second device, wherein the first sensing measurement signal is obtained based on a first sensing random bitstream, and the first sensing random bitstream is generated based on one or more of first parameters as follows:
a first key;
first sequence information; and
an identifier of the first sensing measurement signal.

24. The communication device according to claim 23, wherein in a case where the first parameter comprises the identifier, the identifier is determined based on one or more of:
a medium access control (MAC) address of the first device;
an identifier of a basic service set (BSS) to which the first device belongs;
a sensing measurement session identifier corresponding to the first sensing measurement signal;
a sensing measurement exchange identifier corresponding to the first sensing measurement signal; and
a first random sequence, the first random sequence being a random sequence obtained by a station from an access point during a sensing session negotiation.

25. The communication device according to claim 23 or 24, wherein in a case where the first parameter comprises the first key, the first key is determined based on one or more of:
a group key;
a sensing group key;
a pairwise key; and
a peer-to-peer pairwise key.

26. The communication device according to claim 25, wherein in a case where the first key comprises the sensing group key, the sensing group key is used to encrypt a sensing measurement exchange corresponding to a sensing measurement session; or
the sensing group key is used to encrypt a sensing measurement exchange corresponding to a sensing measurement instance.

27. The communication device according to any one of claims 23 to 26, wherein in a case where the first parameter comprises the first sequence information, the first sequence information is determined based on one or more of:
a random number;
a value of a first counter; and
a random sequence with a pre-defined length.

28. The communication device according to claim 27, wherein in a case where the first sequence information is determined based on the value of the first counter, the first sensing measurement signal is one of a plurality of sensing measurement signals transmitted in a plurality of sensing measurement exchanges, and a respective value of a first counter corresponding to each sensing measurement signal among the plurality of sensing measurement exchanges is different.

29. The communication device according to claim 28, wherein the respective value of the first counter corresponding to each sensing measurement signal among the plurality of sensing measurements increases as a number of sensing measurement exchanges increases; or
the respective value of the first counter corresponding to each sensing measurement signal among the plurality of sensing measurement exchanges decreases as the number of sensing measurement exchanges increases.

30. The communication device according to any one of claims 23 to 29, wherein the transmitting unit is further configured to transmit the first parameter to the second device.

31. The communication device according to claim 30, wherein the first parameter is carried in one or more of:
a sensing polling trigger frame;
a sensing measurement announcement (NDPA) frame;
a sensing responder to sensing initiator (SR2SI) measurement trigger frame; and
a sensing responder to sensing responder (SR2SR) measurement trigger frame.

32. The communication device according to claim 30, wherein the first parameter is transmitted through a process of a second sensing measurement exchange, the second sensing measurement exchange is performed before a first sensing measurement exchange, and the first sensing measurement exchange corresponds to the first sensing measurement signal.

33. The communication device according to claim 32, wherein the first parameter is carried in one or more of information as follows:
a sensing polling trigger frame;
a sensing measurement announcement (NDPA) frame;
a sensing responder to sensing initiator (SR2SI) sensing trigger frame;
a sensing responder to sensing responder (SR2SR) sensing trigger frame;
a sensing reporting trigger frame;
a threshold-based sensing reporting trigger frame; and
a sensing measurement result reporting frame.

34. A communication device, comprising:
a receiving unit, configured to receive a first sensing measurement signal transmitted by a first device, wherein the first sensing measurement signal is obtained based on a first sensing random bitstream, and the first sensing random bitstream is generated based on one or more of first parameters as follows:
a first key;
first sequence information; and
an identifier of the first sensing measurement signal.

35. The communication device according to claim 34, wherein in a case where the first parameter comprises the identifier, the identifier is determined based on one or more of:
a medium access control (MAC) address of the first device;
an identifier of a basic service set (BSS) to which the first device belongs;
a sensing measurement session identifier corresponding to the first sensing measurement signal;
a sensing measurement exchange identifier corresponding to the first sensing measurement signal; and
a first random sequence, the first random sequence being a random sequence obtained by a station from an access point during a sensing session negotiation.

36. The communication device according to claim 34 or 35, wherein in a case where the first parameter comprises the first key, the first key is determined based on one or more of:
a group key;
a sensing group key;
a pairwise key; and
a peer-to-peer pairwise key.

37. The communication device according to claim 36, wherein in a case where the first key comprises the sensing group key, the sensing group key is used to encrypt a sensing measurement exchange corresponding to a sensing measurement session; or
the sensing group key is used to encrypt a sensing measurement exchange corresponding to a sensing measurement instance.

38. The communication device according to any one of claims 34 to 37, wherein in a case where the first parameter comprises the first sequence information, the first sequence information is determined based on one or more of:
a random number;
a value of a first counter; and
a random sequence with a pre-defined length.

39. The communication device according to claim 38, wherein in a case where the first sequence information is determined based on the value of the first counter, the first sensing measurement signal is one of a plurality of sensing measurement signals transmitted in a plurality of sensing measurement exchanges, and a respective value of a first counter corresponding to each sensing measurement signal among the plurality of sensing measurement exchanges is different.

40. The communication device according to claim 39, wherein the respective value of the value of the first counter corresponding to each sensing measurement signal among the plurality of sensing measurements increases as a number of sensing measurement exchanges increases; or
the respective value of the first counter corresponding to each sensing measurement signal among the plurality of sensing measurement exchanges decreases as the number of sensing measurement exchanges increases.

41. The communication device according to any one of claims 34 to 40, wherein the receiving unit is further configured to receive the first parameter transmitted by the first device.

42. The communication device according to claim 41, wherein the first parameter is carried in one or more of:
a sensing polling trigger frame;
a sensing measurement announcement (NDPA) frame;
a sensing responder to sensing initiator (SR2SI) measurement trigger frame; and
a sensing responder to sensing responder (SR2SR) measurement trigger frame.

43. The communication device according to claim 41, wherein the first parameter is transmitted through a process of a second sensing measurement exchange, the second sensing measurement exchange is performed before a first sensing measurement exchange, and the first sensing measurement exchange corresponds to the first sensing measurement signal.

44. The communication device according to claim 43, wherein the first parameter is carried in one or more of information as follows:
a sensing polling trigger frame;
a sensing measurement announcement (NDPA) frame;
a sensing responder to sensing initiator (SR2SI) sensing trigger frame;
a sensing responder to sensing responder (SR2SR) sensing trigger frame;
a sensing reporting trigger frame;
a threshold-based sensing reporting trigger frame; and
a sensing measurement result reporting frame.

45. A communication device, comprising a transceiver, a memory and a processor, wherein the memory is configured to store a program, and the processor is configured to call the program in the memory and control the transceiver to receive or transmit a signal, to cause the communication device to perform the method according to any one of claims 1 to 22.

46. An apparatus, comprising a processor configured to call a program from a memory, to cause the apparatus to perform the method according to any one of claims 1 to 22.

47. A chip, comprising a processor configured to call a program from a memory, to cause a device equipped with the chip to perform the method according to any one of claims 1 to 22.

48. A computer-readable storage medium, storing a program thereon, wherein the program causes a computer to perform the method according to any one of claims 1 to 22.

49. A computer program product, comprising a program, wherein the program causes a computer to perform the method according to any one of claims 1 to 22.

50. A computer program, wherein the computer program causes a computer to perform the method according to any one of claims 1 to 22.
